# EUROPEAN PATENT SPECIFICATION

(11) **EP 4 229 904 B1**
(45) Date of publication and mention of the grant of the patent: **11.03.2026**
(21) Application number: 21795008.8
(22) Date of filing: 14.10.2021
(51) Int. Cl.: H04W 28/18, H04W 88/06, H04W 88/08

(54) **MANAGEMENT OF MASTER AND SECONDARY CELL GROUP CONFIGURATIONS**
VERWALTUNG VON MASTER- UND SEKUNDÄRZELLENGRUPPENKONFIGURATIONEN
GESTION DE CONFIGURATIONS DE GROUPES DE CELLULES MAÎTRESSES ET SECONDAIRES

(30) Priority: 14.10.2020 US 202063091573 P
(43) Date of publication of application: 23.08.2023
(73) Proprietor: Telefonaktiebolaget LM Ericsson (publ), 164 83 Stockholm (SE)
(72) Inventor: CENTONZA, Angelo, 18008 Granada (ES); PAPPA, Ioanna, 118 28 Stockholm (SE); BRISMAR, Sofia, 181 61 Lidingö (SE); HULTIN, Fredrik, 590 48 Vikingstad (SE); WIEMANN, Henning, 52080 Aachen (DE)
(74) Representative: Koitel, Raivo
(86) International application number: PCT/IB2021/059459
(87) International publication number: WO 2022/079658

(56) References cited:
- EP-A1- 2 939 456
- EP-A1- 3 624 547
- EP-B1- 2 939 456
- US-A1- 2018 288 826
- US-A1- 2019 253 937
- US-A1- 2020 120 553
- US-A1- 2020 229 258
- GOOGLE: "Supporting EN-DC delta configuration in CU-DU architecture", vol. RAN WG3, no. Sanya, China; 20180416 - 20180420, 6 April 2018 (2018-04-06), XP051416849, Retrieved from the Internet <URL:http://www.3gpp.org/ftp/tsg%5Fran/WG3%5FIu/TSGR3%5F99bis/Docs/> [retrieved on 20180406]
- ERICSSON: "Correction on inter-node messages from CU to DU", vol. RAN WG2, no. Chongqing, China; 20191014 - 20191018, 3 October 2019 (2019-10-03), XP051804190, Retrieved from the Internet <URL:https://ftp.3gpp.org/tsg_ran/WG2_RL2/TSGR2_107bis/Docs/R2-1913313.zip 38.331_CR1310(Rel-15)_R2-1913313- Correction on inter-node messages from CU to DU.docx> [retrieved on 20191003]

## Description

### BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

In 3GPP the dual-connectivity (DC) solution has been specified, both for LTE and NR, as well as between LTE and NR. In DC two nodes involved, a master node (MN) and a Secondary Node (SN). Multi-connectivity (MC) is the case when there are more than 2 nodes involved. Also, it has been proposed that DC can also be used in the Ultra Reliable Low Latency Communications (URLLC) cases in order to enhance the robustness and to avoid connection interruptions.

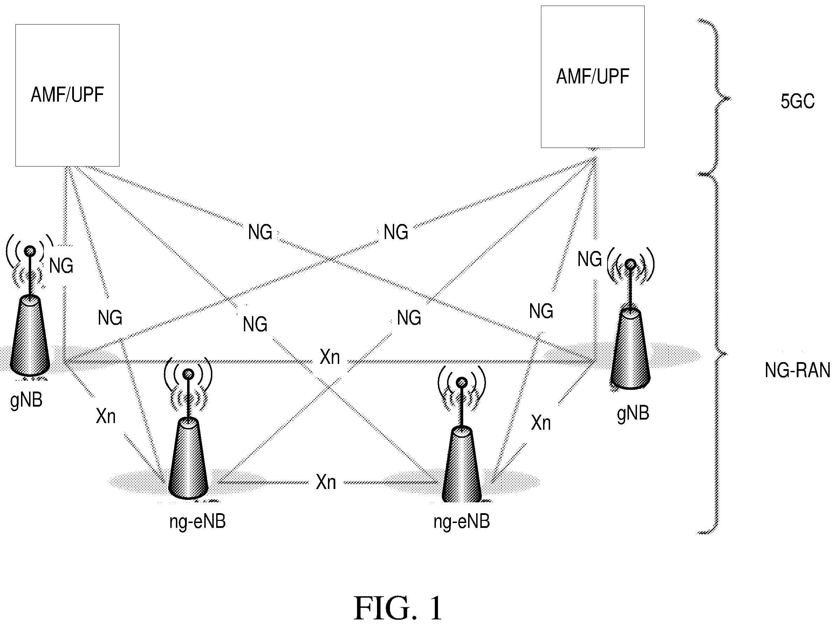

5G in 3GPP introduce both a new core network (5GC) and a new Radio Access Network (NR). The core network, 5GC, will however, also support other RATs than NR. It has been agreed that LTE (or E-UTRA) should also be connected to 5GC. LTE base stations (eNBs) that are connected to 5GC is called ng-eNB and is part of NG-RAN which also consist of NR base stations called gNBs. Figure 1 is a diagram illustrating how the base stations are connected to each other and the nodes in 5GC.

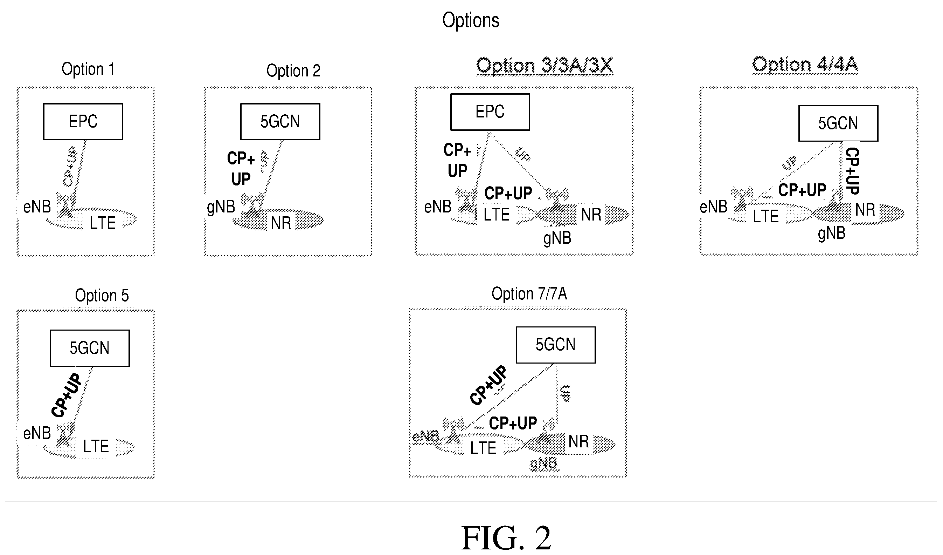

In particular, Figure 1 is a diagram of a 5GS Architecture containing 5GC and NG-RAN. There are different ways to deploy 5G network with or without interworking with LTE (also referred to as E-UTRA) and evolved packet core (EPC), as depicted in Figure 2. In principle, NR and LTE can be deployed without any interworking, denoted by NR stand-alone (SA) operation, that is gNB in NR can be connected to 5G core network (5GC) and eNB can be connected to EPC with no interconnection between the two (Option 1 and Option 2 in the Figure 2). On the other hand, the first supported version of NR is the so-called EN-DC (E-UTRAN-NR Dual Connectivity), illustrated by Option 3. In such a deployment, dual connectivity between NR and LTE is applied with LTE as the master and NR as the secondary node. The RAN node (gNB) supporting NR, may not have a control plane connection to core network (EPC), instead it relies on the LTE as master node (MeNB). This is also called as "Non-standalone NR". Notice that in this case the functionality of an NR cell is limited and would be used for connected mode UEs as a booster and/or diversity leg, but an RRC_IDLE UE cannot camp on these NR cells.

With introduction of 5GC, other options may be also valid. As mentioned above, option 2 supports stand-alone NR deployment where gNB is connected to 5GC. Similarly, LTE can also be connected to 5GC using option 5 (also known as eLTE, E-UTRA/5GC, or LTE/5GC and the node can be referred to as an ng-eNB). In these cases, both NR and LTE are seen as part of the NG-RAN (and both the ng-eNB and the gNB can be referred to as NG-RAN nodes). It is worth noting that, Option 4 and option 7 are other variants of dual connectivity between LTE and NR which will be standardized as part of NG-RAN connected to 5GC, denoted by MR-DC (Multi-Radio Dual Connectivity). Under the MR-DC umbrella, we have:
- EN-DC (Option 3): LTE is the master node and NR is the secondary (EPC CN employed)
- NE-DC (Option 4): NR is the master node and LTE is the secondary (5GCN employed)
- NGEN-DC (Option 7): LTE is the master node and NR is the secondary (5GCN employed)
- NR-DC (variant of Option 2): Dual connectivity where both the master and secondary are NR (5GCN employed).

Figure 2 is a diagram of LTE and NR internetworking options. As migration for these options may differ from different operators, it is possible to have deployments with multiple options in parallel in the same network e.g. there could be eNB base station supporting option 3, 5 and 7 in the same network as NR base station supporting 2 and 4. In combination with dual connectivity solutions between LTE and NR it is also possible to support CA (Carrier Aggregation) in each cell group (i.e. MCG and SCG) and dual connectivity between nodes on same RAT (e.g. NR-NR DC). For the LTE cells, a consequence of these different deployments is the co-existence of LTE cells associated to eNBs connected to EPC, 5GC or both EPC/5GC.

The release of the whole SN configuration, i.e. including any current configuration - either higher layers (PDCP, or PDCP and SDAP for user plane) and/or lower layers (RLC, MAC and PHY) - is performed via SN release procedure (detailed in section 2.1.4). Alternatively, the MN can, upon deciding to send the UE to RRC_INACTIVE state, send an indication for the SN to release solely its lower layer configuration, i.e. higher layer configuration, if any, can be kept (also detailed in section 2.1.4).
Throughout this disclosure, the following terminologies are used,
- "SCG configuration" is used to refer to the SN lower layer configuration, i.e. (RLC, MAC and PHY).
- "SN configuration" is used to refer to the configuration related to the whole SN, i.e. SCG configuration which contains the lower layer information as well as higher layers (i.e. SDAP and PDCP)

The general operations related to MR-DC are captured in TS 37.340 and the ones related to MR-DC with 5GC are reproduced in this section (while for EN-DC, procedures slightly differ and can be found in clause 10 from TS 37.340).

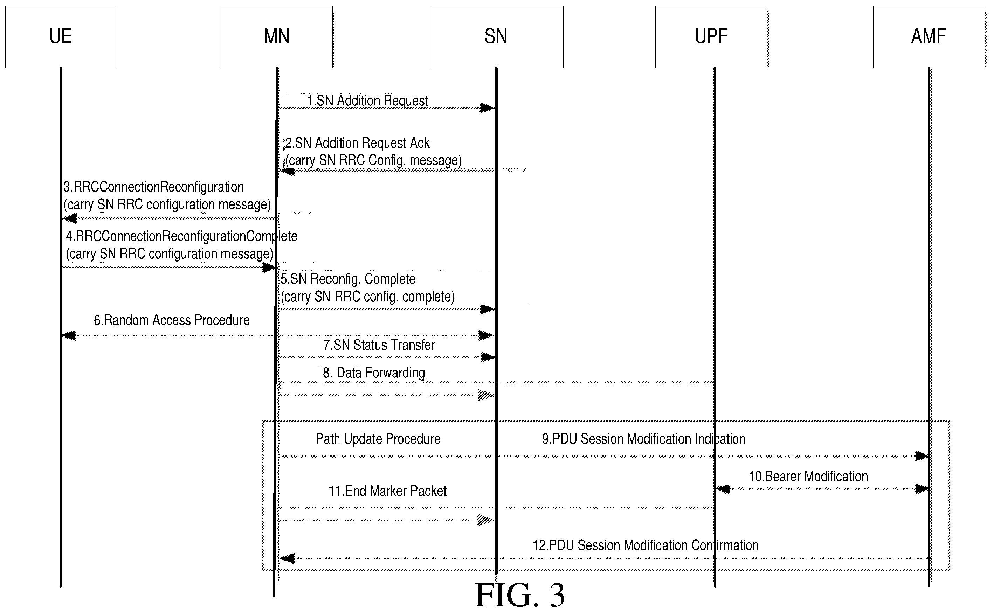

Figure 3 is a signalling diagram of a SN Addition procedure.
1. The MN decides to request the target SN to allocate radio resources for one or more specific PDU Sessions/QoS Flows, indicating QoS Flows characteristics (QoS Flow Level QoS parameters, PDU session level TNL address information, and PDU session level Network Slice info). In addition, for bearers requiring SCG radio resources, MN indicates the requested SCG configuration information, including the entire UE capabilities and the UE capability coordination result. In this case, the MN also provides the latest measurement results for SN to choose and configure the SCG cell(s). The MN may request the SN to allocate radio resources for split SRB operation. The MN always provides all the needed security information to the SN (even if no SN terminated bearers are setup) to enable SRB3 to be setup based on SN decision. For bearer options that require Xn-U resources between the MN and the SN, MN needs to provide Xn-U TNL address information, Xn-U DL TNL address information for SN terminated bearers and Xn-U UL TNL address information for MN terminated bearers. The SN may reject the request.
NOTE 1: For split bearers, MCG and SCG resources may be requested of such an amount, that the QoS for the respective QoS Flow is guaranteed by the exact sum of resources provided by the MCG and the SCG together, or even more. For MN terminated split bearers, the MN decision is reflected in step 1 by the QoS Flow parameters signalled to the SN, which may differ from QoS Flow parameters received over NG.
NOTE 2: For a specific QoS flow, the MN may request the direct establishment of SCG and/or split bearers, i.e. without first having to establish MCG bearers. It is also allowed that all QoS flows can be mapped to SN terminated bearers, i.e. there is no QoS flow mapped to an MN terminated bearer.
2. If the RRM entity in the SN is able to admit the resource request, it allocates respective radio resources and, dependent on the bearer type options, respective transport network resources. For bearers requiring SCG radio resources the SN triggers UE Random Access so that synchronisation of the SN radio resource configuration can be performed. The SN decides for the PScell and other SCG Scells and provides the new SCG radio resource configuration to the MN in a SN RRC configuration message contained in the SN Addition Request Acknowledge message. In case of bearer options that require Xn-U resources between the MN and the SN, the SN provides Xn-U TNL address information for the respective E-RAB, Xn-U UL TNL address information for SN terminated bearers, Xn-U DL TNL address information for MN terminated bearers. For SN terminated bearers, the SN provides the NG-U DL TNL address information for the respective PDU Session and security algorithm. If SCG radio resources have been requested, the SCG radio resource configuration is provided.
NOTE 3: In case of MN terminated bearers, transmission of user plane data may take place after step 2.
NOTE 4: In case of SN terminated bearers, data forwarding and the SN Status Transfer may take place after step 2.
NOTE 5: For MN terminated NR SCG bearers for which PDCP duplication with CA is configured the MN allocates 2 separate Xn-U bearers. For SN terminated NR MCG bearers for which PDCP duplication with CA is configured the SN allocates 2 separate Xn-U bearers.
3. The MN sends the MN RRC reconfiguration message to the UE including the SN RRC configuration message, without modifying it.
4. The UE applies the new configuration and replies to MN with MN RRC reconfiguration complete message, including a SN RRC response message for SN, if needed. In case the UE is unable to comply with (part of) the configuration included in the MN RRC reconfiguration message, it performs the reconfiguration failure procedure.
5. The MN informs the SN that the UE has completed the reconfiguration procedure successfully via SN Reconfiguration Complete message, including the encoded SN RRC response message, if received from the UE.
6. If configured with bearers requiring SCG radio resources, the UE performs synchronisation towards the PSCell configured by the SN. The order the UE sends the MN RRC reconfiguration complete message and performs the Random Access procedure towards the SCG is not defined. The successful RA procedure towards the SCG is not required for a successful completion of the RRC Connection Reconfiguration procedure.
7. In case of SN terminated bearers using RLC AM, the MN sends SN Status Transfer.
8. In case of SN terminated bearers using RLC AM, and dependent on the bearer characteristics of the respective QoS Flows, the MN may take actions to minimise service interruption due to activation of MR-DC (Data forwarding).
9-12. For SN terminated bearers, the update of the UP path towards the 5GC is performed via PDU Session Path Update procedure.

The SN Release procedure may be initiated either by the MN or by the SN and is used to initiate the release of the UE context and relevant resources at the SN. The recipient node of this request can reject it, e.g., if a SN change procedure is triggered by the SN.

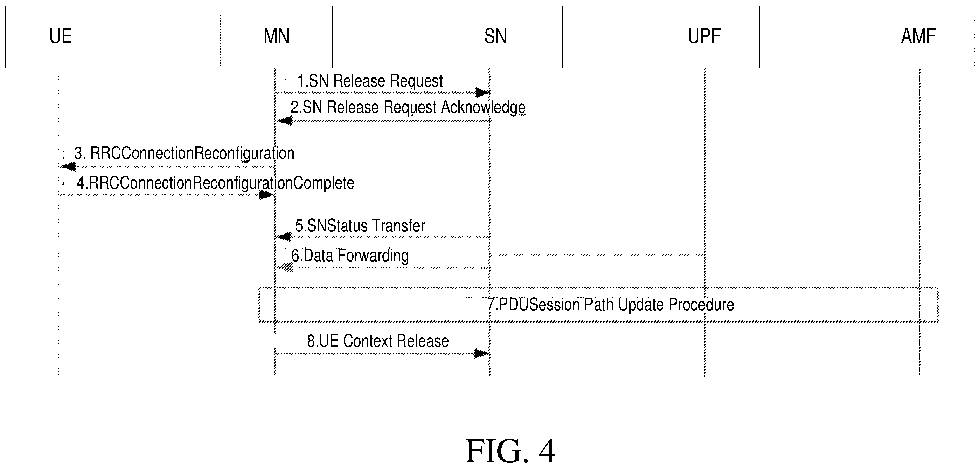

Figure 4 is a signalling diagram of a MN initiated SN release procedure.
1. The MN initiates the procedure by sending the SN Release Request message. If data forwarding is requested, the MN provides data forwarding addresses to the SN.
2. The SN confirms SN Release by sending the SN Release Request Acknowledge message. If appropriate, the SN may reject SN Release, e.g., if the SN change procedure is triggered by the SN.
3/4. If required, the MN indicates in the MN RRC reconfiguration message towards the UE that the UE shall release the entire SCG configuration. In case the UE is unable to comply with (part of) the configuration included in the MN RRC reconfiguration message, it performs the reconfiguration failure procedure.
NOTE 1: If data forwarding is applied, timely coordination between steps 1 and 2 may minimize gaps in service provision, this is however regarded to be an implementation matter.
5. If the released bearers use RLC AM, the SN sends the SN Status transfer.
6. Data forwarding from the SN to the MN takes place.
7. If applicable, the PDU Session path update procedure is initiated.
8. Upon reception of the UE Context Release message, the SN can release radio and C-plane related resource associated to the UE context. Any ongoing data forwarding may continue.

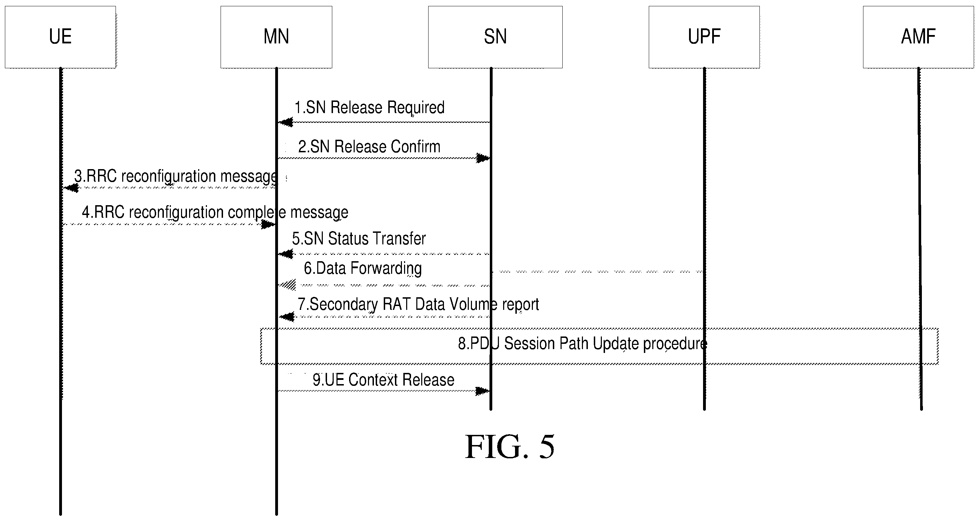

Figure 5 is a signalling diagram of an example signalling flow for the SN initiated SN Release procedure.
1. The SN initiates the procedure by sending the *SN Release Required* message which does not contain any inter-node message.
2. If data forwarding is requested, the MN provides data forwarding addresses to the SN in the *SN Release Confirm* message. The SN may start data forwarding and stop providing user data to the UE as early as it receives the *SN Release Confirm* message.
3/4. If required, the MN indicates in the *MN RRC reconfiguration* message towards the UE that the UE shall release the entire SCG configuration. In case the UE is unable to comply with (part of) the configuration included in the *MN RRC reconfiguration* message, it performs the reconfiguration failure procedure.
NOTE 2: If data forwarding is applied, timely coordination between steps 2 and 3 may minimize gaps in service provision. This is however regarded to be an implementation matter.
5. If the released bearers use RLC AM, the SN sends the *SN Status transfer.*
6. Data forwarding from the SN to the MN takes place.
7. The SN sends the *Secondary RAT Data Volume Report* message to the MN and includes the data volumes delivered to the UE as described in section 10.11.2.
NOTE 3: The order the SN sends the *Secondary RAT Data Volume Report* message and performs data forwarding with MN is not defined. The SN may send the report when the transmission of the related QoS flow is stopped.
8. If applicable, the PDU Session path update procedure is initiated.
9. Upon reception of the *UE Context Release* message, the SN can release radio and C-plane related resource associated to the UE context. Any ongoing data forwarding may continue.

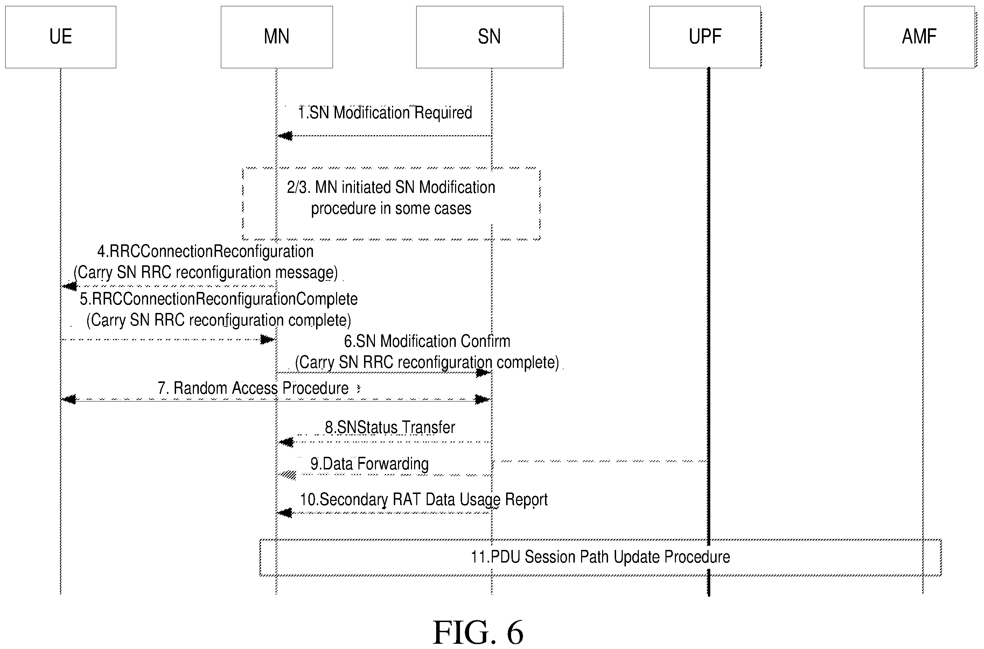

Figure 6 is a signalling diagram of a SN modification procedure - SN initiated with MN involvement.

The SN uses the procedure to perform configuration changes of the SCG within the same SN, e.g. to trigger the modification/release of the user plane resource configuration and to trigger PSCell changes (e.g. when a new security key is required or when the MN needs to perform PDCP data recovery). The MN cannot reject the release request of PDU session/QoS flows. The SN also uses the procedure to request the MN to provide more DRB IDs to be used for SN terminated bearers or to return DRB IDs used for SN terminated bearers that are not needed any longer. Figure 6 shows an example signalling flow for SN initiated SN Modification procedure.
1. The SN sends the *SN Modification Required* message including an SN RRC reconfiguration message, which may contain user plane resource configuration related context, other UE context related information and the new radio resource configuration of SCG. In case of change of security key, the *PDCP Change Indication* indicates that an SN security key update is required. In case the MN needs to perform PDCP data recovery, the *PDCP Change Indication* indicates that PDCP data recovery is required.
   The SN can decide whether the change of security key is required.
2/3. The MN initiated SN Modification procedure may be triggered by *SN Modification Required* message, e.g. when an SN security key change needs to be applied.
NOTE 3: For SN terminated NR MCG bearers to be setup for which PDCP duplication with CA is configured the SN allocates up to 4 separate Xn-U bearers.
4. The MN sends the *MN RRC reconfiguration* message to the UE including the SN RRC reconfiguration message with the new SCG radio resource configuration.
5. The UE applies the new configuration and sends the *MN RRC reconfiguration complete* message, including an SN RRC response message, if needed. In case the UE is unable to comply with (part of) the configuration included in the *MN RRC reconfiguration* message, it performs the reconfiguration failure procedure.
6. Upon successful completion of the reconfiguration, the success of the procedure is indicated in the *SN Modification Confirm* message including the SN RRC response message, if received from the UE.
7. If instructed, the UE performs synchronisation towards the PSCell configured by the SN as described in SN Addition procedure. Otherwise, the UE may perform UL transmission directly after having applied the new configuration.
8. If PDCP termination point is changed for bearers using RLC AM, and when RRC full configuration is not used, the SN Status Transfer takes place between the MN and the SN (Figure 6 depicts the case where a bearer context is transferred from the SN to the MN).
9. If applicable, data forwarding between MN and the SN takes place (Figure 6 depicts the case where a user plane resource configuration related context is transferred from the SN to the MN).
10. The SN sends the *Secondary RAT Data Usage Report* message to the MN and includes the data volumes delivered to and received from the UE as described in clause 10.11.2.
NOTE 4: The order the SN sends the *Secondary RAT Data Usage Report* message and performs data forwarding with MN is not defined. The SN may send the report when the transmission of the related QoS flow is stopped.
11. If applicable, a PDU Session path update procedure is performed.

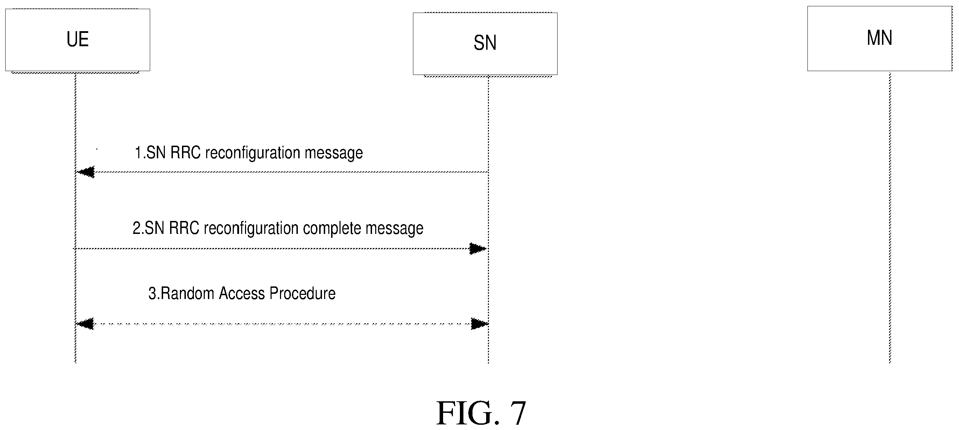

Figure 7 is a signaling diagram of SN initiated SN modification without MN involvement.
The SN initiated SN modification procedure without MN involvement is used to modify the configuration within SN in case no coordination with MN is required, including the addition/modification/release of SCG SCell and PSCell change (e.g. when the security key does not need to be changed and the MN does not need to be involved in PDCP recovery). The SN may initiate the procedure to configure or modify CPC configuration within the same SN. Figure 7 shows an example signalling flow for SN initiated SN modification procedure without MN involvement. The SN can decide whether the Random Access procedure is required.
1. The SN sends the *SN RRC reconfiguration* message to the UE through SRB3.
2. The UE applies the new configuration and replies with the *SN RRC reconfiguration complete* message. In case the UE is unable to comply with (part of) the configuration included in the *SN RRC reconfiguration* message, it performs the reconfiguration failure procedure.
3. If instructed, the UE performs synchronisation towards the PSCell of the SN as described in SN Addition procedure. Otherwise the UE may perform UL transmission after having applied the new configuration.
3a.In case of CPC, the UE maintains connection with source PSCell after receiving CPC configuration, and starts evaluating the CPC execution conditions for the candidate PSCell(s). If at least one CPC candidate PSCell satisfies the corresponding CPC execution condition, the UE detaches from the source PSCell, applies the stored corresponding configuration for that selected candidate PSCell and synchronises to that candidate PSCell. The UE completes the CPC execution procedure by sending an *RRCReconfigurationComplete* message to the new PSCell.

There currently exist certain challenge(s).

US 2020/0229258 A1 describes techniques for network access. A method includes receiving a first request message forwarded by a distributed unit in a base station and indication information of the distributed unit with respect to the first request message, the first request message requesting to connect a user equipment to a network; determining a processing to be performed on the first request message based on the indication Information; and transmitting an indication of the determined processing to the distributed unit.

EP 3 624 547 A1 describes techniques for processing mobility when dual connectivity is performed using dual RRC.

### SUMMARY

The present disclosure provides methods and network nodes as defined in the independent claims. The embodiments described herein are not to be regarded as necessarily defining the invention unless they fall within the scope of the appended claims. Embodiments not falling within the terms of the claims are to be understood as background art or examples useful for understanding the invention.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
Figure 1 is a diagram of a 5GS architecture containing 5GC and NG-RAN;
Figure 2 is a diagram of LTE and NR internetworking options;
Figure 3 is a signalling diagram of a SN addition procedure;
Figure 4 is a signalling diagram of a SN release procedure - MN initiated;
Figure 5 is a signalling diagram of a SN release procedure - SN initiated;
Figure 6 is a signalling diagram of a SN modification procedure - SN initiated with MN involvement;
Figure 7 is a signalling diagram of a SN modification - SN initiated without MN involvement;
Figure 8 is a signalling diagram of an example procedure for SCG addition and signalling between MN-CU and MN-DU;
Figure 9 is a signalling diagram of an example procedure for SCG modification and signalling between MN-CU and MN-DU;
Figure 10 is a signalling diagram of an example procedure for SCG release and signalling between MN-CU and MN-DU;
Figure 11 is a diagram of a wireless network in accordance with some embodiments of the present disclosure;
Figure 12 is a diagram of a user equipment in accordance with some embodiments of the present disclosure;
Figure 13 is a diagram of a virtualization environment in accordance with some embodiments of the present disclosure;
Figure 14 is a diagram of a telecommunication network connected via an intermediate network to a host computer in accordance with some embodiments of the present disclosure;
Figure 15 is a diagram of a host computer communicating via a base station with a user equipment over a partially wireless connection in accordance with some embodiments of the present disclosure;
Figure 16 is a flowchart illustrating methods implemented in a communication system including a host computer, a base station and a user equipment in accordance with some embodiments of the present disclosure;
Figure 17 is a flowchart illustrating methods implemented in a communication system including a host computer, a base station and a user equipment in accordance with some embodiments of the present disclosure;
Figure 18 is a flowchart illustrating methods implemented in a communication system including a host computer, a base station and a user equipment in accordance with some embodiments of the present disclosure;
Figure 19 is a flowchart illustrating methods implemented in a communication system including a host computer, a base station and a user equipment in accordance with some embodiments of the present disclosure;
Figure 20 is a flowchart illustrating method in accordance with some embodiments of the present disclosure;
Figure 21 is diagram of an example network node in accordance with some embodiments of the present disclosure;
Figure 22 is diagram of another example network node in accordance with some embodiments of the present disclosure;
Figure 23 is a diagram of a virtualization apparatus in accordance with some embodiments of the present disclosure.

### DETAILED DESCRIPTION

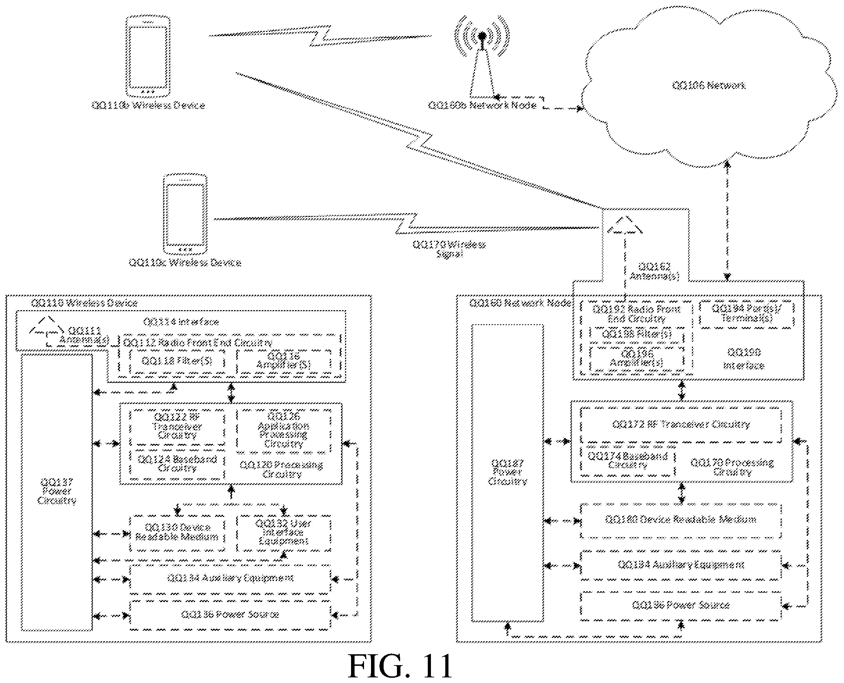

The invention made is described in the embodiments referring to figure 11.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Various embodiments are presented.

In one embodiment, due to SCG addition, gNB-CU initiates UE Context Setup or UE Context Modification procedure towards gNB-DU. An SCG addition is the result of signaling over an MN-SN interface such as the X2 or the Xn of procedures by which the MN and SN coordinate how the SCG will be added.

In another embodiment, due to SCG modification, gNB-CU initiates UE Context Modification procedure towards gNB-DU. An SCG modification is the result of signaling over an MN-SN interface such as the X2 or the Xn of procedures by which the MN and SN coordinate how the SCG will be modified.

In yet another embodiment, due to removal of SCG, the gNB-CU initiates UE Context Modification procedure towards gNB-DU. An SCG removal is the result of signaling over an MN-SN interface such as the X2 or the Xn of procedures by which the MN and SN confirm removal of the SCG.

### SCG Addition

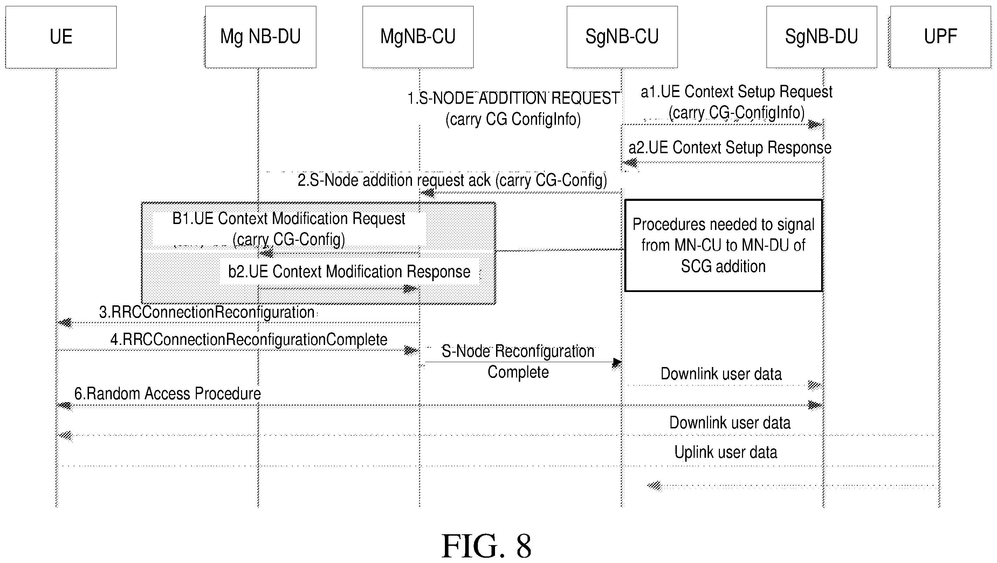

In an embodiment when an SCG is added, the MN-gNB-CU should be notified of the fact that an SCG has been created at the SN. This is shown with the signaling messages in Figure 8. Figure 8 is an example procedure for SCG addition and signaling between MN-CU and MN-DU

The UE context modification request and response procedures in Figure 8 show how the MN-CU may communicate to the MN-DU the event of SCG addition. In one embodiment of this invention it is proposed to add a new IE to the UE Context Modification Request message to indicate that the context modification is due to the addition of an SCG.

It should be noted that an SCG can also be added directly at the time when the UE context is created at the MN, namely, an SCG can be established at the same time as when an MCG is established. In this scenario, and as another embodiment of this invention, it is proposed to add a new IE to the UE Context Setup Request message signalled from the MN-CU-CP to the MN-DU, to indicate that the UE context is established at the MN and that an SCG has been configured as well.

This indication allows the M-gNB-DU to understand that the UE has been configured with a secondary cell group. With that the M-gNB-DU may deduce that some of the UE capabilities are now used to serve the secondary cell group established at SN. This may lead to a change or a limitation of the MCG configuration, e.g. to reduce the amount of resources/features/UE capabilities utilized by the MN.

### SCG Modification

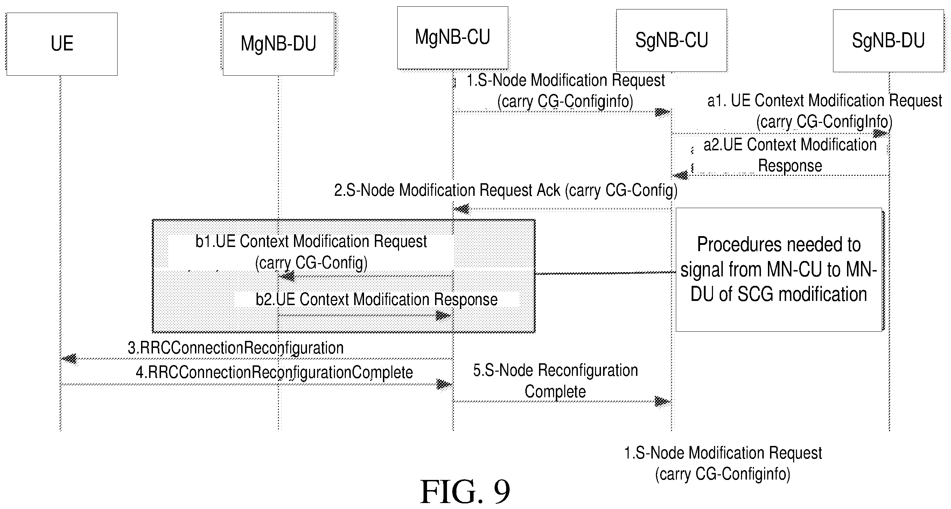

Figure 9 is an example procedure for SCG modification and signaling between MN-CU and MN-DU

In this embodiment, the UE context modification request and response, b1, b2 shown in Figure 9 show how the MN-CU may communicate to the MN-DU the event of SCG modification. In one embodiment of this invention it is proposed to add a new IE to the UE Context Modification Request message to indicate that the context modification is due to the modification of an SCG.

This indication allows the M-gNB-DU to understand that the SN modified the UE's SCG configuration, i.e. that the UE's secondary leg has undergone modification of its configuration. With that the M-gNB-DU may deduce that a different subset of the UE capabilities is now "used" by the SN. Accordingly, the MN may have to a change the UE's MCG configuration, e.g. to optimise the amount of resources/features/UE capabilities utilized by the MN in light of the new SN configuration.

### SCG Release

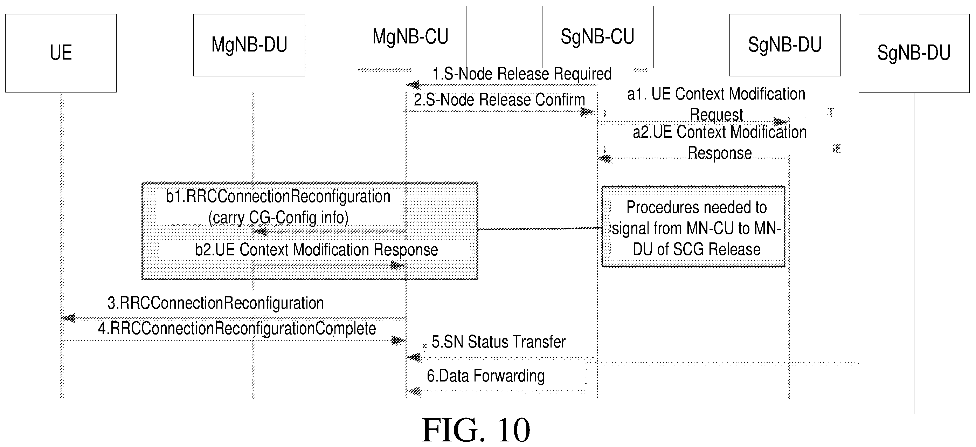

Figure 10 is an example procedure for SCG release and signaling between MN-CU and MN-DU

In this embodiment, the procedures for UE context modification request and response b1, b2 in Figure 10 show how the MN-CU may communicate to the MN-DU the event of SCG release. In one embodiment of this invention it is proposed to add a new IE to the UE Context Modification Request message to indicate that the context modification is due to the release of an SCG.

This indication allows the M-gNB-DU to understand that the secondary cell group previously configured at the UE has been released. With that the M-gNB-DU may deduce that the MCG configuration is no longer restricted to the Band Combinations (BC) and Feature Sets (FS) that the SN selected previously. Hence, the MN may choose to configure additional or better features in the UE's MCG configuration.

### Example of information added to the F1 interface

In the following the addition of a new flag to indicate SCG addition, modification or removal is shown as part of the UE context modification procedure, see highlighted text in the tabular below. This is one example of how the information about addition/modification/release of an SCG can be indicated to the MN-DU.

### UE CONTEXT SETUP REQUEST

This message is sent by the gNB-CU to request the setup of a UE context.

Direction: gNB-CU → gNB-DU.

| **IE/Group Name** | | | **Presence** | **Range** | **IE type and reference** | **Semantics description** | **Criticality** | **Assigned Criticality** |
|---|---|---|---|---|---|---|---|---|
| Message Type | | | M | | 9.3.1.1 | | YES | Reject |
| gNB-CU UE F1AP ID | | | M | | 9.3.1.4 | | YES | Reject |
| gNB-DU UE F1AP ID | | | O | | 9.3.1.5 | | YES | Ignore |
| SpCell ID | | | M | | NR CGI 9.3.1.12 | Special Cell as defined in TS 38.QQ221 [16]. For handover case, this IE is considered as target cell. | YES | Reject |
| ServCellInd ex | | | M | | INTEGER (0..31,...) | | YES | Reject |
| SpCell UL Configured | | | O | | Cell UL Configure d | | YES | Ignore |
| | | | | | 9.3.1.33 | | | |
| CU to DU RRC Information | | | M | | 9.3.1.25 | | YES | Reject |
| **Candidate SpCell List** | | | | *0..1* | | | YES | Ignore |
| | **>Candid ate SpCell Item IEs** | | | *I* .. *<maxno ofCandi dateSpC ells>* | | | EACH | Ignore |
| | | >>Can didate SpCell ID | M | | NR CGI 9.3.1.12 | Special Cell as defined in TS 38.QQ221 [16] | - | |
| DRX Cycle | | | O | | DRX Cycle 9.3.1.24 | | YES | Ignore |
| Resource Coordinatio n Transfer Container | | | O | | OCTET STRING | Includes the *MeNB Resource Coordinatio n Information* IE as defined in subclause 9.2.116 of TS 36.423 [9] for EN-DC case or *MR-DC Resource Coordinatio n Information* IE as defined in TS 38.423 [28] for NGEN-DC and NE-DC cases. | YES | Ignore |
| **SCell To Be Setup List** | | | | *0..1* | | | YES | Ignore |
| | **>SCell to Be Setup Item IEs** | | | *1.*. *<maxno ofSCells* > | | | EACH | Ignore |
| | | >>SCe 11 ID | M | | NR CGI 9.3.1.12 | SCell Identifier in gNB | - | |
| | | >>SCe 11Index | M | | INTEGER (1..31) | | - | |
| | | >>SCe 11 UL Config ured | O | | Cell UL Configure d 9.3.1.33 | | - | |
| | | >>serv ingCell MO | O | | INTEGER (1..64) | | YES | Ignore |
| **SRB to Be Setup List** | | | | *0..1* | | | YES | Reject |
| | **>SRB to Be Setup Item IEs** | | | *1*.. *<maxno ofSRBs* > | | | EACH | Reject |
| | | >>SRB ID | M | | 9.3.1.7 | | - | |
| | | >>Duplic ation Indicatio n | O | | ENUMER ATED (true, ..., false) | If included, it should be set to true. This IE is ignored if the *Additional Duplication Indication* IE is present. | - | |
| | | >>Additi onal Duplicati on Indicatio n | O | | ENUMER ATED (three, four, ...) | | YES | Ignore |
| **DRB to Be Setup List** | | | | *0..1* | | | YES | Reject |
| | **>DRB to Be Setup Item IEs** | | | *1* .. *<maxno ofDRBs* > | | | EACH | Reject |
| | >>DRB ID | | M | | 9.3.1.8 | | - | |
| | >>CHOIC E QoS Informatio n | | M | | | | - | |
| | >>>E-UTRAN QoS | | M | | 9.3.1.19 | Shall be used for EN-DC case to convey E-RAB Level QoS Parameters | - | |
| | **>>>DRB Informa tion** | | | 1 | | Shall be used for NG-RAN cases | YES | Ignore |
| | | >>>>D RB QoS | M | | 9.3.1.45 | | - | |
| | | >>>>S-NSSAI | M | | 9.3.1.38 | | - | |
| | | >>>>N otificati on Control | O | | 9.3.1.56 | | - | |
| | | **>>>>Fl ows Mappe d to DRB Item** | | *1* .. *<maxno ofQoSFl* ows > | | | - | |
| | | >>>>> QoS Flow Identifi er | M | | 9.3.1.63 | | - | |
| | | >>>>> QoS Flow Level QoS Param eters | M | | 9.3.1.45 | | - | |
| | | >>>>> QoS Flow Mappi ng Indicat ion | O | | 9.3.1.72 | | YES | Ignore |
| | | >>>>> TSC Traffic Charac teristic s | O | | 9.3.1.141 | Traffic pattern information associated with the QFI. Details in TS 23.501 [21]. | YES | Ignore |
| **>>UL UP TNL Informati on to be setup List** | | | | *1* | | | - | |
| | | **>>>U L UP TNL Inform ation to Be Setup Item IEs** | | *1* .. *<maxno ofULUP TNLInfo rmation* > | | | - | |
| | >>>>U L UP TNL Informa tion | | M | | UP Transport Layer Informatio n 9.3.2.1 | gNB-CU endpoint of the F1 transport bearer. For delivery of UL PDUs. | - | |
| | >>>>B H Informa tion | | O | | 9.3.1.114 | | - | |
| | | >>RL C Mode | M | | 9.3.1.27 | | - | |
| | | >>UL Configura tion | O | | UL Configurai ton 9.3.1.31 | Information about UL usage in gNB-DU. | - | |
| | >>Duplica tion Activation | | O | | 9.3.1.36 | Information on the initial state of CA based UL PDCP duplication. This IE is ignored if the *RLC Duplication Information* IE is present. | - | |
| | >> DC Based Duplicatio n Configure d | | O | | ENUMER ATED (true, ..., false) | Indication on whether DC based PDCP duplication is configured or not. If included, it should be set to true. | YES | Reject |
| | >>DC Based Duplicatio n Activation | | O | | Duplicatio n Activation 9.3.1.36 | Information on the initial state of DC basedUL PDCP duplication. This IE is ignored if the *RLC Duplication Information* IE is present. | YES | Reject |
| | >>DL PDCP SN length | | M | | ENUMER ATED (12bits, 18bits, ...) | | YES | Ignore |
| | >>UL PDCP SN length | | O | | ENUMER ATED (12bits, 18bits, ...) | | YES | Ignore |
| | **>>Additi onal PDCP Duplicati on TNL List** | | | *0..1* | | | YES | Ignore |
| | | **>>>Ad ditiona l PDCP Duplic ation TNL Items** | | *1*.. *<maxno ofAdditi onalPD CPDupl icationT NL >* | | | EACH | Ignore |
| | | >>>>A dditiona 1 PDCP Duplica tion UP TNL Informa tion | M | | UP Transport Layer Informatio n 9.3.2.1 | gNB-CU endpoint of the F1 transport bearer. For delivery of UL PDUs. | - | |
| | >>RLC Duplicatio n Informatio n | | O | | 9.3.1.146 | | YES | Ignore |
| Inactivity Monitoring Request | | | O | | ENUMER ATED (true, ...) | | YES | Reject |
| RAT-Frequency Priority Information | | | O | | 9.3.1.34 | | YES | Reject |
| RRC-Container | | | O | | 9.3.1.6 | Includes the *DL-DCCH-Message* IE as defined in subclause 6.2 of TS 38.QQ231 [8], encapsulate d in a PDCP PDU. | YES | Ignore |
| Masked IMEISV | | | O | | 9.3.1.55 | | YES | Ignore |
| Serving PLMN | | | O | | PLMN ID 9.3.1.14 | Indicates the PLMN serving the UE. | YES | Ignore |
| gNB-DU UE Aggregate Maximum Bit Rate Uplink | | | C-ifDRBSe tup | | Bit Rate 9.3.1.22 | The gNB-DU UE Aggregate Maximum Bit Rate Uplink is to be enforced by the gNB-DU. | YES | Ignore |
| RRC Delivery Status Request | | | O | | ENUMER ATED (true, ...) | Indicates whether RRC DELIVERY REPORT procedure is requested for the RRC message. | YES | Ignore |
| Resource Coordinatio n Transfer Information | | | O | | 9.3.1.73 | | YES | Ignore |
| servingCell MO | | | O | | INTEGER (1..64, ...) | | YES | Ignore |
| New gNB-CU UE F1AP ID | | | O | | gNB-CU UE F1AP ID 9.3.1.4 | | YES | Reject |
| RAN UE ID | | | O | | OCTET STRING (SIZE (8)) | | YES | Ignore |
| Trace Activation | | | O | | 9.3.1.88 | | YES | Ignore |
| Additional RRM Policy Index | | | O | | 9.3.1.90 | | YES | Ignore |
| **BH RLC Channel** to **be Setup List** | | | | *0..1* | | | YES | Reject |
| | **>BH RLC Channel to be Setup Item IEs** | | | *1* .. *<maxno ofBHRL CChann els>* | | | EACH | Reject |
| | | >>BH RLC CH ID | M | | 9.3.1.113 | | - | |
| | | >>CHOI CE *BH QoS Informati on* | M | | | | | |
| | | >>>B H RLC CH QoS | M | | QoS Flow Level QoS Parameter s 9.3.1.45 | Shall be used for SA case. | | |
| | | >>>E-UTRA N BH RLC CH QoS | M | | E-UTRAN QoS 9.3.1.19 | Shall be used for EN-DC case. | | |
| | | >>>Co ntrol Plane Traffic Type | M | | 9.3.1.115 | | | |
| | >>RLC Mode | | M | | 9.3.1.27 | | - | |
| | >>BAP Control PDU Channel | | O | | ENUMER ATED (true, ...) | | - | |
| | >>Traffi c Mapping Informati on | | O | | 9.3.1.95 | | - | |
| Configured BAP Address | | | O | | 9.3.1.111 | The BAP address configured for the correspondi ng child IAB-node. | YES | Reject |
| NR V2X Services Authorized | | | O | | 9.3.1.116 | | YES | Ignore |
| LTE V2X Services Authorized | | | O | | 9.3.1.117 | | YES | Ignore |
| NR UE Sidelink Aggregate Maximum Bit Rate | | | O | | 9.3.1.119 | This IE applies only if the UE is authorized for NR V2X services. | YES | Ignore |
| LTE UE Sidelink Aggregate Maximum Bit Rate | | | O | | 9.3.1.118 | This IE applies only if the UE is authorized for LTE V2X services. | YES | Ignore |
| PC5 Link Aggregated Bit Rate | | | O | | Bit Rate | Only applies for non-GBR and unicast QoS Flows. | YES | Ignore |
| | | | | | 9.3.1.22 | | | |
| **SL DRB to Be Setup List** | | | | *0..1* | | | YES | Reject |
| | **>SL DRB to Be Setup Item IEs** | | | *1*.. *<maxno ofSLDR Bs>* | | | EACH | Reject |
| | >>SL DRB ID | | M | | 9.3.1.120 | | - | |
| | **>>SL DRB Informati on** | | | *1* | | | YES | Ignore |
| | | >>>SL DRB QoS | M | | PC5 QoS Parameter s 9.3.1.122 | | - | |
| | | **>>>Flow s Mapped to SL DRB Item** | | *1* .. *<maxno ofPC5Q oSFlows* > | | | - | |
| | | >>>>P C5 QoS Flow Identifie r | | | 9.3.1.121 | | - | |
| | >>RLC mode | | M | | 9.3.1.27 | | - | |
| **Conditional Inter-DU Mobility Information** | | | O | | | | YES | Reject |
| | | >CHO Trigger | M | | ENUMER ATED (CHO-initiation, CHO-replace, ...) | | - | - |
| | | >Target gNB-DU UE F1AP ID | C-ifCHOm od | | 9.3.1.5 | Allocated at the target gNB-DU | - | - |
| Management Based MDT PLMN List | | | O | | MDT PLMN List 9.3.1.151 | | YES | Ignore |
| Serving NID | | | O | | 9.3.1.155 | | YES | Reject |
| SCG Indicator | | | O | | ENUMER ATED (added, modified, released,... ) | | YES | Ignore |

This message is sent by the gNB-CU to provide UE Context information changes to the gNB-DU.

Direction: gNB-CU → gNB-DU

| **IE/Group Name** | | | | **Presence** | **Range** | **IE type and reference** | **Semantics description** | **Criticality** | **Assigned Criticality** |
|---|---|---|---|---|---|---|---|---|---|
| Message Type | | | | M | | 9.3.1.1 | | YES | Reject |
| gNB-CU UE F1AP ID | | | | M | | 9.3.1.4 | | YES | Reject |
| gNB-DU UE F1AP ID | | | | M | | 9.3.1.5 | | YES | Reject |
| SpCell ID | | | | O | | NR CGI 9.3.1.12 | Special Cell as defined in TS 38.QQ221 [16]. For handover case, this IE is considered as target cell. | YES | Ignore |
| ServCellInd ex | | | | O | | INTEGER (0..31, ...) | | YES | Reject |
| SpCell UL Configured | | | | O | | Cell UL Configure d | | YES | Ignore |
| | | | | | | 9.3.1.33 | | | |
| DRX Cycle | | | | O | | DRX Cycle 9.3.1.24 | | YES | Ignore |
| CU to DU RRC Information | | | | O | | 9.3.1.25 | | YES | Reject |
| Transmissio n Action Indicator | | | | O | | 9.3.1.11 | | YES | Ignore |
| Resource Coordinatio n Transfer Container | | | | O | | OCTET STRING | Includes the *MeNB Resource Coordinatio n Information* IE as defined in subclause 9.2.116 of TS 36.423 [9] for EN-DC case or *MR-DC Resource Coordinatio n Information* IE as defined in TS 38.423 [28] for NGEN-DC and NE-DC cases. | YES | Ignore |
| RRC Reconfigurat ion Complete Indicator | | | | O | | 9.3.1.30 | | YES | Ignore |
| RRC-Container | | | | O | | 9.3.1.6 | Includes the *DL-DCCH-Message* IE as defined in subclause 6.2 of TS 38.QQ231 [8], encapsulate d in a PDCP PDU. | YES | Reject |
| **SCell To Be Setup List** | | | | | *0..1* | | | YES | Ignore |
| | **>SCell to Be Setup Item IEs** | | | | *1*.. *<maxn oofSCe lls>* | | | EACH | Ignore |
| | | >>SCe 11 ID | | M | | NR CGI | SCell Identifier in gNB | - | |
| | | | | | | 9.3.1.12 | | | |
| | | >>SCe llIndex | | M | | INTEGER (1..31) | | - | |
| | | >>SCe 11 UL Config ured | | O | | Cell UL Configure d | | - | |
| | | | | | | 9.3.1.33 | | | |
| | | >>serv ingCell MO | | O | | INTEGER (1..64) | | YES | Ignore |
| **SCell To Be Removed List** | | | | | *0..1* | | | YES | Ignore |
| | **>SCell to Be Removed Item IEs** | | | | *1* .. *<maxn oofSCe lls>* | | | EACH | Ignore |
| | | >>SCe 11 ID | | M | | NR CGI | SCell Identifier in gNB | - | |
| | | | | | | 9.3.1.12 | | | |
| **SRB to Be Setup List** | | | | | *0..1* | | | YES | Reject |
| | **>SRB to Be Setup Item IEs** | | | | *1..<ma xnoofS RBs>* | | | EACH | Reject |
| | | >>SRB ID | | M | | 9.3.1.7 | | - | |
| | | >>Dup lication Indicati on | | O | | ENUMER ATED (true, ..., false) | | - | |
| **DRB to Be Setup List** | | | | | *0..1* | | | YES | Reject |
| | **>DRB to Be Setup Item IEs** | | | | *1* .. *<maxn oofDR Bs >* | | | EACH | Reject |
| | | >>DR BID | | M | | 9.3.1.8 | | - | |
| | | >>CH OICE QoS Inform ation | | M | | | | - | |
| | >>>E-UTRA N QoS | | | M | | 9.3.1.19 | Shall be used for EN-DC case to convey E-RAB Level QoS Parameters | | |
| | **>>>D RB Infor mation** | | | | *1* | | Shall be used for NG-RAN cases | YES | Ignore |
| | >>>>D RB QoS | | | M | | 9.3.1.45 | | - | |
| | >>>>S NSSAI | | | M | | 9.3.1.38 | | - | |
| | >>>>N otificat ion Contro 1 | | | O | | 9.3.1.56 | | - | |
| | **>>>>F lows Mappe d to DRB Item** | | | | *1*.. *<maxn oofQoS Flows* > | | | - | |
| | >>>>> QoS Flow Identifi er | | | M | | 9.3.1.63 | | - | |
| | >>>>> QoS Flow Level QoS Parame ters | | | M | | 9.3.1.45 | | - | |
| | >>>>> QoS Flow Mappi ng Indicati on | | | O | | 9.3.1.72 | | YES | Ignore |
| | | **>>UL UP TNL Infor mation to be setup List** | | | *1* | | | - | |
| | | **>>>U L UP TNL Infor mation to Be Setup Item IEs** | | | *1* .. *<maxn oofUL UPTN LInfor mation* > | | | - | |
| | | | >>> >UL UP TNL Info rmat ion | M | | UP Transport Layer Informatio n 9.3.2.1 | gNB-CU endpoint of the F1 transport bearer. For delivery of UL PDUs. | - | |
| | >> RLC Mode | | | M | | 9.3.1.27 | | - | |
| | >>UL Configura tion | | | O | | UL Configurat ion | Information about UL usage in gNB-DU. | - | |
| | | | | | | 9.3.1.31 | | | |
| | >>Dupl ication Activatio n | | | O | | 9.3.1.36 | Information on the initial state of CA based UL PDCP duplication | - | |
| | | >> DC Based Duplic ation Config ured | | O | | ENUMER ATED (true, ..., false) | Indication on whether DC based PDCP duplication is configured or not. If included, it should be set to true. | YES | Reject |
| | | >>DC Based Duplic ation Activat ion | | O | | Duplicatio n Activation | Information on the initial state of DC based UL PDCP duplication | YES | Reject |
| | | | | | | 9.3.1.36 | | | |
| | | | >>DL PDCP SN length | O | | ENUMER ATED (12bits, 18bits, ...) | | YES | Ignore |
| | | | >>UL PDCP SN length | O | | ENUMER ATED (12bits, 18bits, ...) | | YES | Ignore |
| **DRB to Be Modified List** | | | | | *0..1* | | | YES | Reject |
| | **>DRB to Be Modified Item IEs** | | | | *1* .. *<maxn oofDR Bs >* | | | EACH | Reject |
| | | >>DRB ID | | M | | 9.3.1.8 | | - | |
| | | >>CHOI CE QoS Informati on | | O | | | | - | |
| | | >>>E-UTRAN QoS | | M | | 9.3.1.19 | Used for EN-DC case to convey E-RAB Level QoS Parameters | - | |
| | **>>>DRB Informat ion** | | | | *1* | | Used for NG-RAN cases | YES | Ignore |
| | >>>>DR B QoS | | | M | | 9.3.1.45 | | - | |
| | >>>>S-NSSAI | | | M | | 9.3.1.38 | | - | |
| | >>>>Not ification Control | | | O | | 9.3.1.56 | | - | |
| | **>>>>Flo ws Mapped to DRB Item** | | | | *1* .. *<maxn oofQoS Flows* > | | | - | |
| | >>>>>Q oS Flow Identifier | | | M | | 9.3.1.63 | | - | |
| | >>>>>Q oS Flow Level QoS Paramete rs | | | M | | 9.3.1.45 | | - | |
| | >>>>>Q oS Flow Mapping Indicatio n | | | O | | 9.3.1.72 | | YES | Ignore |
| | **>> UL UP TNL Informat ion to be setup List** | | | | *1* | | | - | |
| | | **>>> UL UP TNL Inform ation to Be Setup Item IEs** | | | *1* .. *<maxn oofUL UPTN LInfor mation* > | | | - | |
| | | >>>> UL UP TNL Inform ation | | M | | UP Transport Layer Informatio n | gNB-CU endpoint of the F1 transport bearer. For delivery of UL PDUs. | - | |
| | | | | | | 9.3.2.1 | | | |
| | >>UL Configur ation | | | O | | UL Configurat ion | Information about UL usage in gNB-DU. | - | |
| | | | | | | 9.3.1.31 | | | |
| | >>DL PDCP SN length | | | O | | ENUMER ATED(12 bits,18bits , ...) | | YES | Ignore |
| | >>UL PDCP SN length | | | O | | ENUMER ATED (12bits, 18bits, ...) | | YES | Ignore |
| | >>Bearer Type Change | | | O | | ENUMER ATED (true, ...) | | YES | Ignore |
| | >> RLC Mode | | | O | | 9.3.1.27 | | YES | Ignore |
| | >>Duplic ation Activatio n | | | O | | 9.3.1.36 | Information on the initial state of CA based UL PDCP duplication | YES | Reject |
| | >> DC Based Duplicati on Configur ed | | | O | | ENUMER ATED (true, ..., false) | Indication on whether DC based PDCP duplication is configured or not. | YES | Reject |
| | >>DC Based Duplicati on Activatio n | | | O | | 9.3.1.36 | Information on the initial state of DC based UL PDCP duplication | YES | Reject |
| **SRB To Be Released List** | | | | | *0..1* | | | YES | Reject |
| | **>SRB To Be Released Item IEs** | | | | *1*.. *<maxn oofSRB* s> | | | EACH | Reject |
| | | >>SRB ID | | M | | 9.3.1.7 | | | |
| **DRB to Be Released List** | | | | | *0..1* | | | YES | Reject |
| | **>DRB to Be Released Item IEs** | | | | *1* .. *<maxn oofDR Bs >* | | | EACH | Reject |
| | | >>DRB ID | | M | | 9.3.1.8 | | - | |
| Inactivity Monitoring Request | | | | O | | ENUMER ATED (true, ...) | | YES | Reject |
| RAT-Frequency Priority Information | | | | O | | 9.3.1.34 | | YES | Reject |
| DRX configuratio n indicator | | | | O | | ENUMER ATED(rel ease,...) | | YES | Ignore |
| RLC Failure Indication | | | | O | | 9.3.1.66 | | YES | Ignore |
| Uplink TxDirectCur rentList Information | | | | O | | 9.3.1.67 | | YES | Ignore |
| GNB-DU Configuratio n Query | | | | O | | ENUMER ATED (true, ...) | Used to request the gNB-DU to provide its configuratio n. | YES | Reject |
| gNB-DU UE Aggregate Maximum Bit Rate Uplink | | | | O | | Bit Rate 9.3.1.22 | The gNB-DU UE Aggregate Maximum Bit Rate Uplink is to be enforced by the gNB-DU. | YES | Ignore |
| Execute Duplication | | | | O | | ENUMER ATED (true, ...) | This IE may be sent only if duplication has been configured for the UE. | YES | Ignore |
| RRC Delivery Status Request | | | | O | | ENUMER ATED (true, ...) | Indicates whether RRC DELIVERY REPORT procedure is requested for the RRC message. | YES | Ignore |
| Resource Coordinatio n Transfer Information | | | | O | | 9.3.1.73 | | YES | Ignore |
| servingCell MO | | | | O | | INTEGER (1..64, ...) | | YES | Ignore |
| Need for Gap | | | | O | | ENUMER ATED (true, ...) | Indicate gap for SeNB configured measuremen t is requested.It only applied to NE DC scenario. | Yes | Ignore |
| Full Configuratio n | | | | O | | ENUMER ATED (full, ...) | | YES | Reject |
| SCG Indicator | | | | O | | ENUMER ATED(ad ded, modified, released,... ) | | YES | Ignore |

| **Range bound** | **Explanation** |
|---|---|
| maxnoofSCells | Maximum no. of SCells allowed towards one UE, the maximum value is 32. |
| maxnoofSRBs | Maximum no. of SRB allowed towards one UE, the maximum value is 8. |
| maxnoofDRBs | Maximum no. of DRB allowed towards one UE, the maximum value is 64. |
| maxnoofULUPTNLInformation | Maximum no. of UL UP TNL Information allowed towards one DRB, the maximum value is 2. |
| maxnoofQoSFlows | Maximum no. of flows allowed to be mapped to one DRB, the maximum value is 64. |

In another embodiment of this invention, in cases when the SN signals to the MN an addition or modification of the SCG, the MN-CU, receiving such signaling from the SN, signals to the MN-DU additional information that highlight to the MN-DU the parameters of the SCG configuration that affect the MN-DU L1/L2 configuraiton. Examples of such parameters could be as follows:
- MN-CU, upon receiving from SN the added or modified Band Combinations used by the SCG, signals them to the MN-DU as part of F1 signalling
- MN-CU, upon receiving from SN the added or modified Feature Sets used by the SCG, signals them to the MN-DU as part of F1 signalling

It should be highlighted that the information shown in the example above with the SCG Indication IE is only one way of representing the requested information. Another way could be to interpret the information already signalled from the MN-CU to the MN-DU in a specific way.

In one embodiment of this invention the interpretation is based on the information contained in the CG-Config IE signalled by MN-CU to MN-DU. The CG-Config may be signalled from the MN-CU to the MN-DU at SCG addition, modification or release. In this embodiment the assumption is that, in order for the MN-CU to communicate to the MN-DU that an SCG addition/modification/release occurred, the MN-CU signals the CG-Config to the MN-DU.

The CG-Config as specified in TS38.QQ231 includes the information shown below:
This message is used to transfer the SCG radio configuration as generated by the SgNB or SeNB. It can also be used by a CU to request a DU to perform certain actions, e.g. to request the DU to perform a new lower layer configuration.

Direction: Secondary gNB or eNB to master gNB or eNB, alternatively CU to DU.

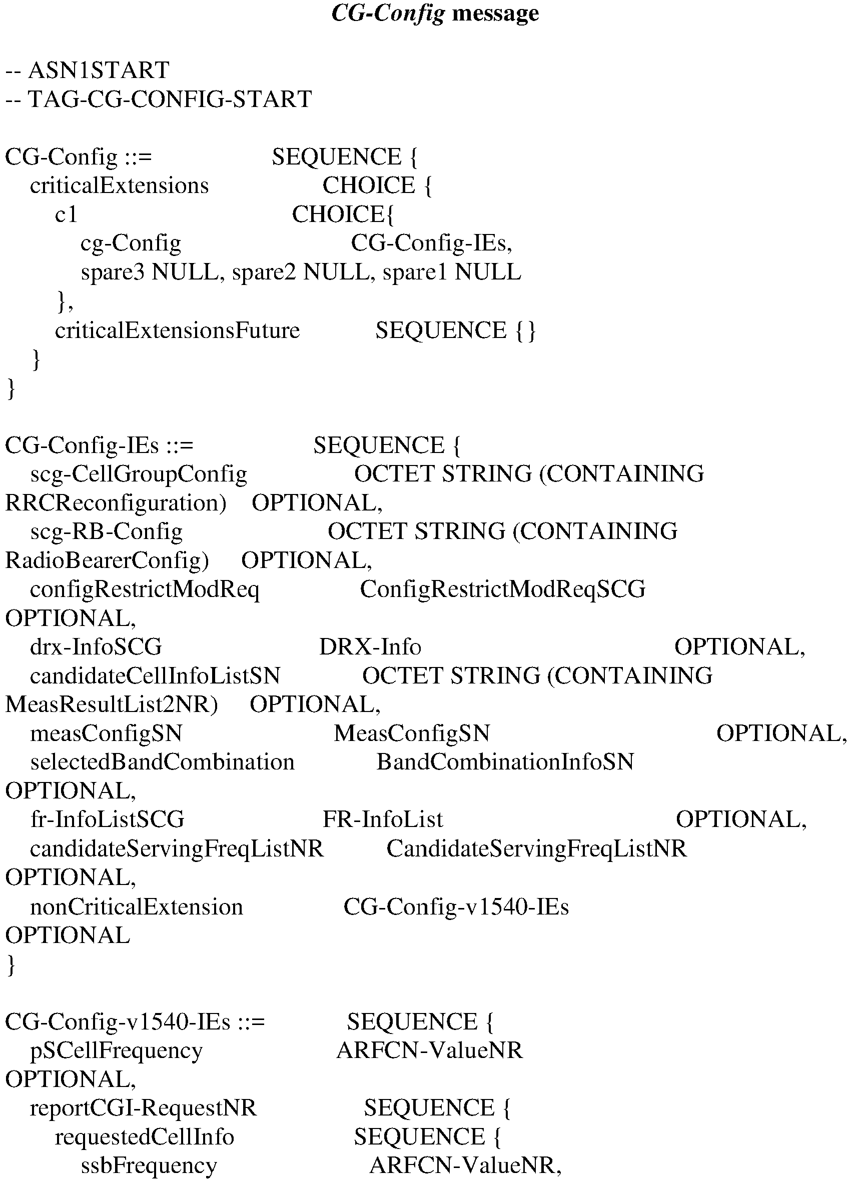

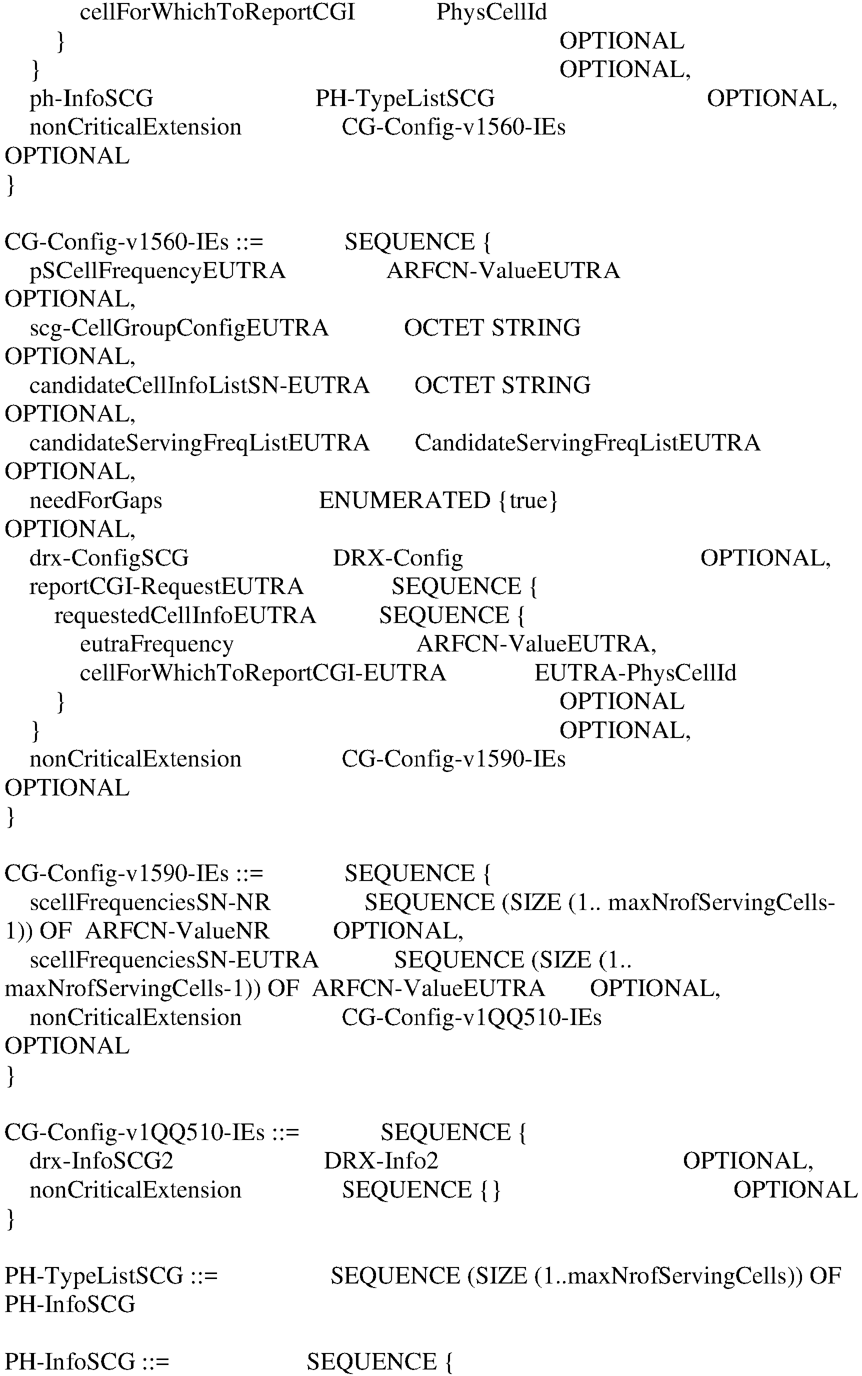

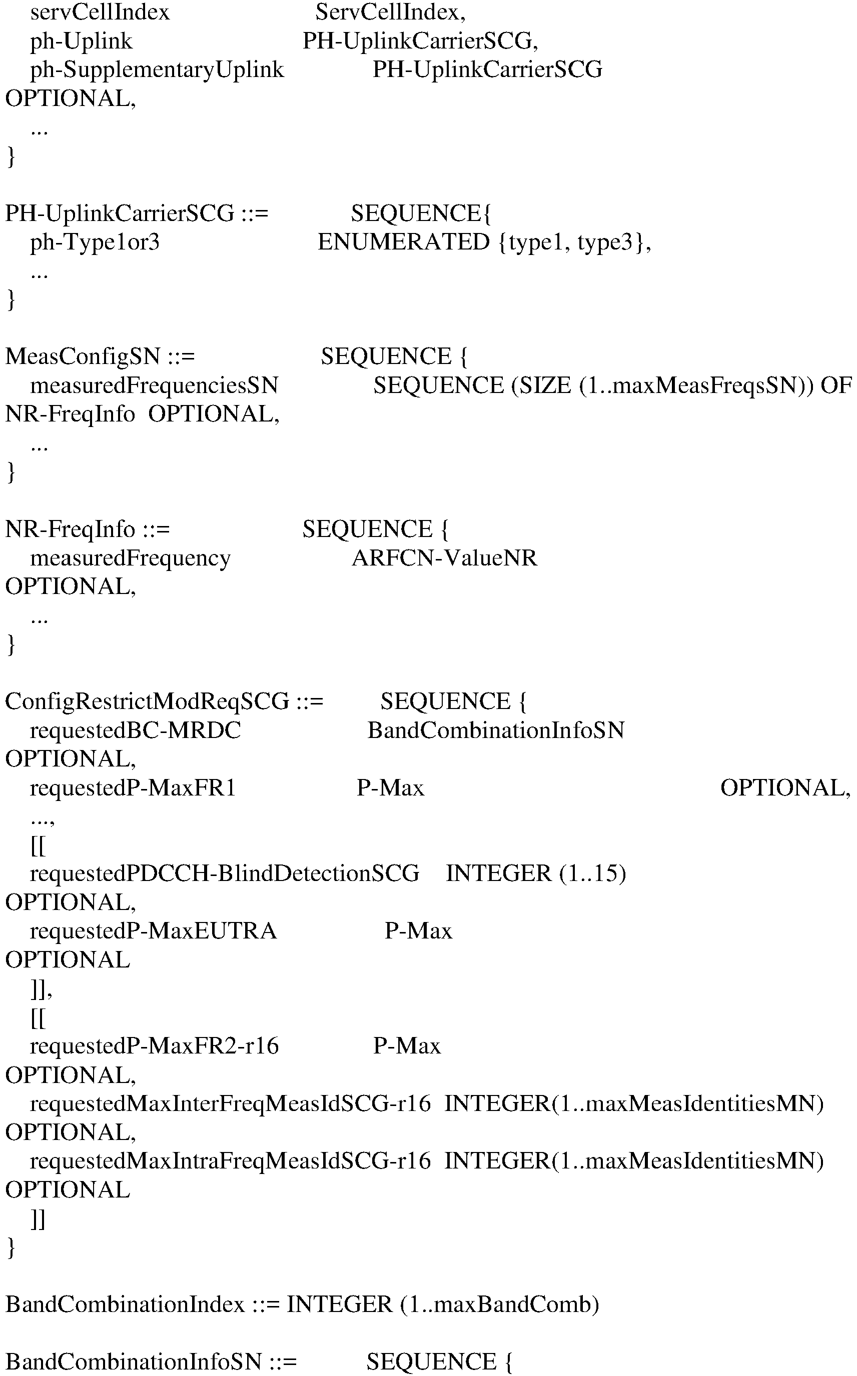

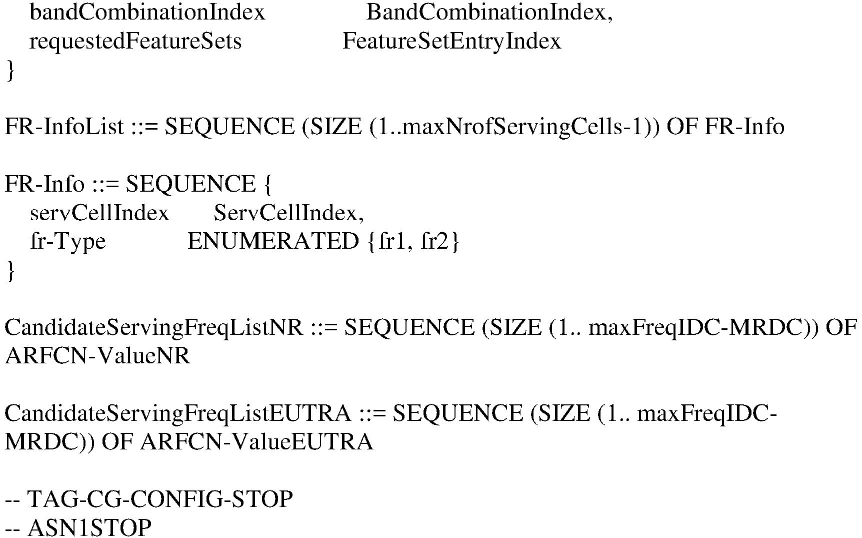

One example of how information in the CG-Config could be interpreted to deduce events on SCG addition/modification/release are provided below:
- If the scg-RB-Config IE is included in the CG-Config, while no SCG radio bearers configuration was signalled to the MN-DU before or if the latest information on SCG signalled to the MN-DU indicated that no SCG radio bearers were configured, the MN-DU should interpret that an SCG addition has been performed.
- If the scg-CellGroupConfig is included in the CG-Config, while no scg-CellGroupConfig was previously signaled to the MN-DU, the MN-DU should interpret that an SCG addition has been performed.
- If the MN-DU has been signalled that an SCG configuration is ongoing and a new signaling is received containing an scg-CellGroupConfig IE, the MN-DU shall assume that an SCG modification has occurred.
- If the MN-DU has previously been signalled that an SCG configuration is in place and if the MN-DU receives a new CG-Config containing no scg-CellGroupConfig IE, no scg-RB-Config and no other information concerning the SCG, the MN-DU shall assume that an SCG release has occurred.
- If the MN-DU has previously been informed that an SCG configuration is in place and if the MN-DU receives an F1: UE Context Modification message from the MN-CU containing no CG-Config, where the MN-CU has previously received a message from the SN notifying the release of an SN (e.g. the Xn: S-NODE RELEASE REQUIRED message) containing no CG-Config IE, the MN-DU shall assume that an SCG release has occurred.

In another embodiment the MN-DU may be signalled the occurrence of SCG addition/modify/release by adding new information in the CG-Config, or indeed to any other existing IE already signalled to the DU as part of F1 procedures.

Figure 11 is a diagram of a wireless network in accordance with some embodiments. Although the subject matter described herein may be implemented in any appropriate type of system using any suitable components, the embodiments disclosed herein are described in relation to a wireless network, such as the example wireless network illustrated in Figure 11. For simplicity, the wireless network of Figure 11 only depicts network QQ106, network nodes QQ160, and QQ106b, and WDs QQ110, QQ110b, and QQ110c. In practice, a wireless network may further include any additional elements suitable to support communication between wireless devices or between a wireless device and another communication device, such as a landline telephone, a service provider, or any other network node or end device. Of the illustrated components, network node QQ160 and wireless device (WD) QQ110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network QQ106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node QQ160 and WD QQ110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 11, network node QQ160 includes processing circuitry QQ170, device readable medium QQ180, interface QQ190, auxiliary equipment QQ184, power source QQ186, power circuitry QQ187, and antenna QQ162. Although network node QQ160 illustrated in the example wireless network of Figure 11 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node QQ160 are depicted as single boxes located within a larger box, or nested within multiple boxes, in practice, a network node may comprise multiple different physical components that make up a single illustrated component (e.g., device readable medium 280 may comprise multiple separate hard drives as well as multiple RAM modules).

Similarly, network node QQ160 may be composed of multiple physically separate components (e.g., a NodeB component and a RNC component, or a BTS component and a BSC component, etc.), which may each have their own respective components. In certain scenarios in which network node QQ160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node QQ160 may be configured to support multiple radio access technologies (RATs). In such embodiments, some components may be duplicated (e.g., separate device readable medium QQ180 for the different RATs) and some components may be reused (e.g., the same antenna QQ162 may be shared by the RATs). Network node QQ160 may also include multiple sets of the various illustrated components for different wireless technologies integrated into network node QQ160, such as, for example, GSM, WCDMA, LTE, NR, WiFi, or Bluetooth wireless technologies. These wireless technologies may be integrated into the same or different chip or set of chips and other components within network node QQ160.

Processing circuitry QQ170 is configured to perform any determining, calculating, or similar operations (e.g., certain obtaining operations) described herein as being provided by a network node. These operations performed by processing circuitry QQ170 may include processing information obtained by processing circuitry QQ170 by, for example, converting the obtained information into other information, comparing the obtained information or converted information to information stored in the network node, and/or performing one or more operations based on the obtained information or converted information, and as a result of said processing making a determination.

Processing circuitry QQ170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node QQ160 components, such as device readable medium QQ180, network node QQ160 functionality. For example, processing circuitry QQ170 may execute instructions stored in device readable medium QQ180 or in memory within processing circuitry QQ170. Such functionality may include providing any of the various wireless features, functions, or benefits discussed herein. In some embodiments, processing circuitry QQ170 may include a system on a chip (SOC).

In some embodiments, processing circuitry QQ170 may include one or more of radio frequency (RF) transceiver circuitry QQ172 and baseband processing circuitry QQ174. In some embodiments, radio frequency (RF) transceiver circuitry QQ172 and baseband processing circuitry QQ174 may be on separate chips (or sets of chips), boards, or units, such as radio units and digital units. In alternative embodiments, part or all of RF transceiver circuitry QQ172 and baseband processing circuitry QQ174 may be on the same chip or set of chips, boards, or units

In certain embodiments, some or all of the functionality described herein as being provided by a network node, base station, eNB or other such network device may be performed by processing circuitry QQ170 executing instructions stored on device readable medium QQ180 or memory within processing circuitry QQ170. In alternative embodiments, some or all of the functionality may be provided by processing circuitry QQ170 without executing instructions stored on a separate or discrete device readable medium, such as in a hard-wired manner. In any of those embodiments, whether executing instructions stored on a device readable storage medium or not, processing circuitry QQ170 can be configured to perform the described functionality. The benefits provided by such functionality are not limited to processing circuitry QQ170 alone or to other components of network node QQ160, but are enjoyed by network node QQ160 as a whole, and/or by end users and the wireless network generally.

Device readable medium QQ180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry QQ170. Device readable medium QQ180 may store any suitable instructions, data or information, including a computer program, software, an application including one or more of logic, rules, code, tables, etc. and/or other instructions capable of being executed by processing circuitry QQ170 and, utilized by network node QQ160. Device readable medium QQ180 may be used to store any calculations made by processing circuitry QQ170 and/or any data received via interface QQ190. In some embodiments, processing circuitry QQ170 and device readable medium QQ180 may be considered to be integrated.

Interface QQ190 is used in the wired or wireless communication of signalling and/or data between network node QQ160, network QQ106, and/or WDs QQ110. As illustrated, interface QQ190 comprises port(s)/terminal(s) QQ194 to send and receive data, for example to and from network QQ106 over a wired connection. Interface QQ190 also includes radio front end circuitry QQ192 that may be coupled to, or in certain embodiments a part of, antenna QQ162. Radio front end circuitry QQ192 comprises filters QQ198 and amplifiers QQ196. Radio front end circuitry QQ192 may be connected to antenna QQ162 and processing circuitry QQ170. Radio front end circuitry may be configured to condition signals communicated between antenna QQ162 and processing circuitry QQ170. Radio front end circuitry QQ192 may receive digital data that is to be sent out to other network nodes or WDs via a wireless connection. Radio front end circuitry QQ192 may convert the digital data into a radio signal having the appropriate channel and bandwidth parameters using a combination of filters QQ198 and/or amplifiers QQ196. The radio signal may then be transmitted via antenna QQ162. Similarly, when receiving data, antenna QQ162 may collect radio signals which are then converted into digital data by radio front end circuitry QQ192. The digital data may be passed to processing circuitry QQ170. In other embodiments, the interface may comprise different components and/or different combinations of components.

In certain alternative embodiments, network node QQ160 may not include separate radio front end circuitry QQ192, instead, processing circuitry QQ170 may comprise radio front end circuitry and may be connected to antenna QQ162 without separate radio front end circuitry QQ192. Similarly, in some embodiments, all or some of RF transceiver circuitry QQ172 may be considered a part of interface QQ190. In still other embodiments, interface QQ190 may include one or more ports or terminals QQ194, radio front end circuitry QQ192, and RF transceiver circuitry QQ172, as part of a radio unit (not shown), and interface QQ190 may communicate with baseband processing circuitry QQ174, which is part of a digital unit (not shown).

Antenna QQ162 may include one or more antennas, or antenna arrays, configured to send and/or receive wireless signals. Antenna QQ162 may be coupled to radio front end circuitry QQ190 and may be any type of antenna capable of transmitting and receiving data and/or signals wirelessly. In some embodiments, antenna QQ162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna QQ162 may be separate from network node QQ160 and may be connectable to network node QQ160 through an interface or port.

Antenna QQ162, interface QQ190, and/or processing circuitry QQ170 may be configured to perform any receiving operations and/or certain obtaining operations described herein as being performed by a network node. Any information, data and/or signals may be received from a wireless device, another network node and/or any other network equipment. Similarly, antenna QQ162, interface QQ190, and/or processing circuitry QQ170 may be configured to perform any transmitting operations described herein as being performed by a network node. Any information, data and/or signals may be transmitted to a wireless device, another network node and/or any other network equipment.

Power circuitry QQ197 may comprise, or be coupled to, power management circuitry and is configured to supply the components of network node QQ160 with power for performing the functionality described herein. Power circuitry QQ197 may receive power from power source QQ186. Power source QQ186 and/or power circuitry QQ197 may be configured to provide power to the various components of network node QQ160 in a form suitable for the respective components (e.g., at a voltage and current level needed for each respective component). Power source QQ186 may either be included in, or external to, power circuitry QQ197 and/or network node QQ160. For example, network node QQ160 may be connectable to an external power source (e.g., an electricity outlet) via an input circuitry or interface such as an electrical cable, whereby the external power source supplies power to power circuitry QQ197. As a further example, power source QQ186 may comprise a source of power in the form of a battery or battery pack which is connected to, or integrated in, power circuitry QQ197. The battery may provide backup power should the external power source fail. Other types of power sources, such as photovoltaic devices, may also be used.

Alternative embodiments of network node QQ160 may include additional components beyond those shown in Figure 11 that may be responsible for providing certain aspects of the network node's functionality, including any of the functionality described herein and/or any functionality necessary to support the subject matter described herein. For example, network node QQ160 may include user interface equipment to allow input of information into network node QQ160 and to allow output of information from network node QQ160. This may allow a user to perform diagnostic, maintenance, repair, and other administrative functions for network node QQ160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, for example, Figure 11, wireless device QQ110 includes antenna QQ111, interface QQ114, processing circuitry QQ120, device readable medium QQ130, user interface equipment QQ132, auxiliary equipment QQ134, power source QQ136 and power circuitry QQ137. WD QQ110 may include multiple sets of one or more of the illustrated components for different wireless technologies supported by WD QQ110, such as, for example, GSM, WCDMA, LTE, NR, WiFi, WiMAX, or Bluetooth wireless technologies, just to mention a few. These wireless technologies may be integrated into the same or different chips or set of chips as other components within WD QQ110.

Antenna QQ111 may include one or more antennas or antenna arrays, configured to send and/or receive wireless signals, and is connected to interface QQ114. In certain alternative embodiments, antenna QQ111 may be separate from WD QQ110 and be connectable to WD QQ110 through an interface or port. Antenna QQ111, interface QQ114, and/or processing circuitry QQ120 may be configured to perform any receiving or transmitting operations described herein as being performed by a WD. Any information, data and/or signals may be received from a network node and/or another WD. In some embodiments, radio front end circuitry and/or antenna QQ111 may be considered an interface.

As illustrated, interface QQ114 comprises radio front end circuitry QQ112 and antenna QQ111. Radio front end circuitry QQ112 comprise one or more filters QQ118 and amplifiers QQ116. Radio front end circuitry QQ114 is connected to antenna QQ111 and processing circuitry QQ120, and is configured to condition signals communicated between antenna QQ111 and processing circuitry QQ120. Radio front end circuitry QQ112 may be coupled to or a part of antenna QQ111. In some embodiments, WD QQ110 may not include separate radio front end circuitry QQ112; rather, processing circuitry QQ120 may comprise radio front end circuitry and may be connected to antenna QQ111. Similarly, in some embodiments, some or all of RF transceiver circuitry QQ122 may be considered a part of interface QQ114. Radio front end circuitry QQ112 may receive digital data that is to be sent out to other network nodes or WDs via a wireless connection. Radio front end circuitry QQ112 may convert the digital data into a radio signal having the appropriate channel and bandwidth parameters using a combination of filters QQ118 and/or amplifiers QQ116. The radio signal may then be transmitted via antenna QQ111. Similarly, when receiving data, antenna QQ111 may collect radio signals which are then converted into digital data by radio front end circuitry QQ112. The digital data may be passed to processing circuitry QQ120. In other embodiments, the interface may comprise different components and/or different combinations of components.

Processing circuitry QQ120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD QQ110 components, such as device readable medium QQ130, WD QQ110 functionality. Such functionality may include providing any of the various wireless features or benefits discussed herein. For example, processing circuitry QQ120 may execute instructions stored in device readable medium QQ130 or in memory within processing circuitry QQ120 to provide the functionality disclosed herein.

As illustrated, processing circuitry QQ120 includes one or more of RF transceiver circuitry QQ122, baseband processing circuitry QQ124, and application processing circuitry QQ126. In other embodiments, the processing circuitry may comprise different components and/or different combinations of components. In certain embodiments processing circuitry QQ120 of WD QQ110 may comprise a SOC. In some embodiments, RF transceiver circuitry QQ122, baseband processing circuitry QQ124, and application processing circuitry QQ126 may be on separate chips or sets of chips. In alternative embodiments, part or all of baseband processing circuitry QQ124 and application processing circuitry QQ126 may be combined into one chip or set of chips, and RF transceiver circuitry QQ122 may be on a separate chip or set of chips. In still alternative embodiments, part or all of RF transceiver circuitry QQ122 and baseband processing circuitry QQ124 may be on the same chip or set of chips, and application processing circuitry QQ126 may be on a separate chip or set of chips. In yet other alternative embodiments, part or all of RF transceiver circuitry QQ122, baseband processing circuitry QQ124, and application processing circuitry QQ126 may be combined in the same chip or set of chips. In some embodiments, RF transceiver circuitry QQ122 may be a part of interface QQ114. RF transceiver circuitry QQ122 may condition RF signals for processing circuitry QQ120.

In certain embodiments, some or all of the functionality described herein as being performed by a WD may be provided by processing circuitry QQ120 executing instructions stored on device readable medium QQ130, which in certain embodiments may be a computer-readable storage medium. In alternative embodiments, some or all of the functionality may be provided by processing circuitry QQ120 without executing instructions stored on a separate or discrete device readable storage medium, such as in a hard-wired manner. In any of those particular embodiments, whether executing instructions stored on a device readable storage medium or not, processing circuitry QQ120 can be configured to perform the described functionality. The benefits provided by such functionality are not limited to processing circuitry QQ120 alone or to other components of WD QQ110, but are enjoyed by WD QQ110 as a whole, and/or by end users and the wireless network generally.

Processing circuitry QQ120 may be configured to perform any determining, calculating, or similar operations (e.g., certain obtaining operations) described herein as being performed by a WD. These operations, as performed by processing circuitry QQ120, may include processing information obtained by processing circuitry QQ120 by, for example, converting the obtained information into other information, comparing the obtained information or converted information to information stored by WD QQ110, and/or performing one or more operations based on the obtained information or converted information, and as a result of said processing making a determination.

Device readable medium QQ130 may be operable to store a computer program, software, an application including one or more of logic, rules, code, tables, etc. and/or other instructions capable of being executed by processing circuitry QQ120. Device readable medium QQ130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry QQ120. In some embodiments, processing circuitry QQ120 and device readable medium QQ130 may be considered to be integrated.

User interface equipment QQ132 may provide components that allow for a human user to interact with WD QQ110. Such interaction may be of many forms, such as visual, audial, tactile, etc. User interface equipment QQ132 may be operable to produce output to the user and to allow the user to provide input to WD QQ110. The type of interaction may vary depending on the type of user interface equipment QQ 132 installed in WD QQ110. For example, if WD QQ110 is a smart phone, the interaction may be via a touch screen; if WD QQ110 is a smart meter, the interaction may be through a screen that provides usage (e.g., the number of gallons used) or a speaker that provides an audible alert (e.g., if smoke is detected). User interface equipment QQ132 may include input interfaces, devices and circuits, and output interfaces, devices and circuits. User interface equipment QQ132 is configured to allow input of information into WD QQ110, and is connected to processing circuitry QQ120 to allow processing circuitry QQ120 to process the input information. User interface equipment QQ132 may include, for example, a microphone, a proximity or other sensor, keys/buttons, a touch display, one or more cameras, a USB port, or other input circuitry. User interface equipment QQ132 is also configured to allow output of information from WD QQ110, and to allow processing circuitry QQ120 to output information from WD QQ110. User interface equipment QQ132 may include, for example, a speaker, a display, vibrating circuitry, a USB port, a headphone interface, or other output circuitry. Using one or more input and output interfaces, devices, and circuits, of user interface equipment QQ132, WD QQ110 may communicate with end users and/or the wireless network, and allow them to benefit from the functionality described herein.

Auxiliary equipment QQ134 is operable to provide more specific functionality which may not be generally performed by WDs. This may comprise specialized sensors for doing measurements for various purposes, interfaces for additional types of communication such as wired communications etc. The inclusion and type of components of auxiliary equipment QQ134 may vary depending on the embodiment and/or scenario.

Power source QQ136 may, in some embodiments, be in the form of a battery or battery pack. Other types of power sources, such as an external power source (e.g., an electricity outlet), photovoltaic devices or power cells, may also be used. WD QQ110 may further comprise power circuitry QQ137 for delivering power from power source QQ136 to the various parts of WD QQ110 which need power from power source QQ136 to carry out any functionality described or indicated herein. Power circuitry QQ137 may in certain embodiments comprise power management circuitry. Power circuitry QQ137 may additionally or alternatively be operable to receive power from an external power source; in which case WD QQ110 may be connectable to the external power source (such as an electricity outlet) via input circuitry or an interface such as an electrical power cable. Power circuitry QQ137 may also in certain embodiments be operable to deliver power from an external power source to power source QQ136. This may be, for example, for the charging of power source QQ136. Power circuitry QQ137 may perform any formatting, converting, or other modification to the power from power source QQ136 to make the power suitable for the respective components of WD QQ110 to which power is supplied.

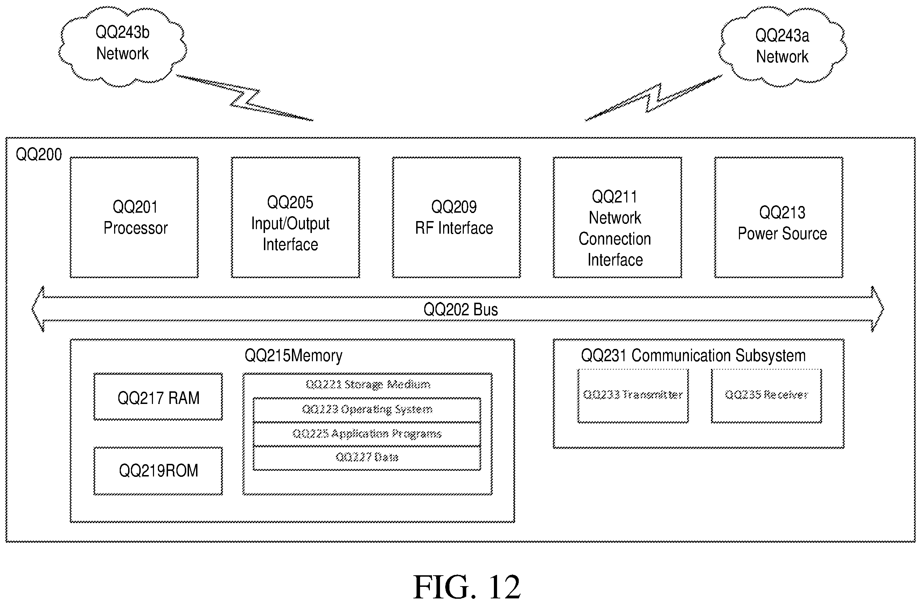

Figure 12 is a diagram that illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE QQ200 may be any UE identified by the 3^{rd} Generation Partnership Project (3GPP), including a NB-IoT UE, a machine type communication (MTC) UE, and/or an enhanced MTC (eMTC) UE. UE QQ200, as illustrated in Figure 12, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 12 is a UE, the components discussed herein are equally applicable to a WD, and vice-versa.

In Figure 12, UE QQ200 includes processing circuitry QQ201 that is operatively coupled to input/output interface QQ205, radio frequency (RF) interface QQ209, network connection interface QQ211, memory QQ215 including random access memory (RAM) QQ217, read-only memory (ROM) QQ219, and storage medium QQ221 or the like, communication subsystem QQ231, power source QQ233, and/or any other component, or any combination thereof. Storage medium QQ221 includes operating system QQ223, application program QQ225, and data QQ227. In other embodiments, storage medium QQ221 may include other similar types of information. Certain UEs may utilize all of the components shown in Figure 12, or only a subset of the components. The level of integration between the components may vary from one UE to another UE. Further, certain UEs may contain multiple instances of a component, such as multiple processors, memories, transceivers, transmitters, receivers, etc.

In Figure 12, processing circuitry QQ201 may be configured to process computer instructions and data. Processing circuitry QQ201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry QQ201 may include two central processing units (CPUs). Data may be information in a form suitable for use by a computer.

In the depicted embodiment, input/output interface QQ205 may be configured to provide a communication interface to an input device, output device, or input and output device. UE QQ200 may be configured to use an output device via input/output interface QQ205. An output device may use the same type of interface port as an input device. For example, a USB port may be used to provide input to and output from UE QQ200. The output device may be a speaker, a sound card, a video card, a display, a monitor, a printer, an actuator, an emitter, a smartcard, another output device, or any combination thereof. UE QQ200 may be configured to use an input device via input/output interface QQ205 to allow a user to capture information into UE QQ200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 12, RF interface QQ209 may be configured to provide a communication interface to RF components such as a transmitter, a receiver, and an antenna. Network connection interface QQ211 may be configured to provide a communication interface to network QQ243a. Network QQ243a may encompass wired and/or wireless networks such as a local-area network (LAN), a wide-area network (WAN), a computer network, a wireless network, a telecommunications network, another like network or any combination thereof. For example, network QQ243a may comprise a Wi-Fi network. Network connection interface QQ211 may be configured to include a receiver and a transmitter interface used to communicate with one or more other devices over a communication network according to one or more communication protocols, such as Ethernet, TCP/IP, SONET, ATM, or the like. Network connection interface QQ211 may implement receiver and transmitter functionality appropriate to the communication network links (e.g., optical, electrical, and the like). The transmitter and receiver functions may share circuit components, software or firmware, or alternatively may be implemented separately.

RAM QQ217 may be configured to interface via bus QQ202 to processing circuitry QQ201 to provide storage or caching of data or computer instructions during the execution of software programs such as the operating system, application programs, and device drivers. ROM QQ219 may be configured to provide computer instructions or data to processing circuitry QQ201. For example, ROM QQ219 may be configured to store invariant low-level system code or data for basic system functions such as basic input and output (I/O), startup, or reception of keystrokes from a keyboard that are stored in a non-volatile memory. Storage medium QQ221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium QQ221 may be configured to include operating system QQ223, application program QQ225 such as a web browser application, a widget or gadget engine or another application, and data file QQ227. Storage medium QQ221 may store, for use by UE QQ200, any of a variety of various operating systems or combinations of operating systems.

Storage medium QQ221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium QQ221 may allow UE QQ200 to access computer-executable instructions, application programs or the like, stored on transitory or non-transitory memory media, to off-load data, or to upload data. An article of manufacture, such as one utilizing a communication system may be tangibly embodied in storage medium QQ221, which may comprise a device readable medium.

In Figure 12, processing circuitry QQ201 may be configured to communicate with network QQ243b using communication subsystem QQ231. Network QQ243a and network QQ243b may be the same network or networks or different network or networks. Communication subsystem QQ231 may be configured to include one or more transceivers used to communicate with network QQ243b. For example, communication subsystem QQ231 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter QQ233 and/or receiver 335 to implement transmitter or receiver functionality, respectively, appropriate to the RAN links (e.g., frequency allocations and the like). Further, transmitter QQ233 and receiver 335 of each transceiver may share circuit components, software or firmware, or alternatively may be implemented separately.

In the illustrated embodiment, the communication functions of communication subsystem QQ231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem QQ231 may include cellular communication, Wi-Fi communication, Bluetooth communication, and GPS communication. Network QQ243b may encompass wired and/or wireless networks such as a local-area network (LAN), a wide-area network (WAN), a computer network, a wireless network, a telecommunications network, another like network or any combination thereof. For example, network QQ243b may be a cellular network, a Wi-Fi network, and/or a near-field network. Power source 313 may be configured to provide alternating current (AC) or direct current (DC) power to components of UE QQ200.

The features, benefits and/or functions described herein may be implemented in one of the components of UE QQ200 or partitioned across multiple components of UE QQ200. Further, the features, benefits, and/or functions described herein may be implemented in any combination of hardware, software or firmware. In one example, communication subsystem QQ231 may be configured to include any of the components described herein. Further, processing circuitry QQ201 may be configured to communicate with any of such components over bus QQ202. In another example, any of such components may be represented by program instructions stored in memory that when executed by processing circuitry QQ201 perform the corresponding functions described herein. In another example, the functionality of any of such components may be partitioned between processing circuitry QQ201 and communication subsystem QQ231. In another example, the non-computationally intensive functions of any of such components may be implemented in software or firmware and the computationally intensive functions may be implemented in hardware.

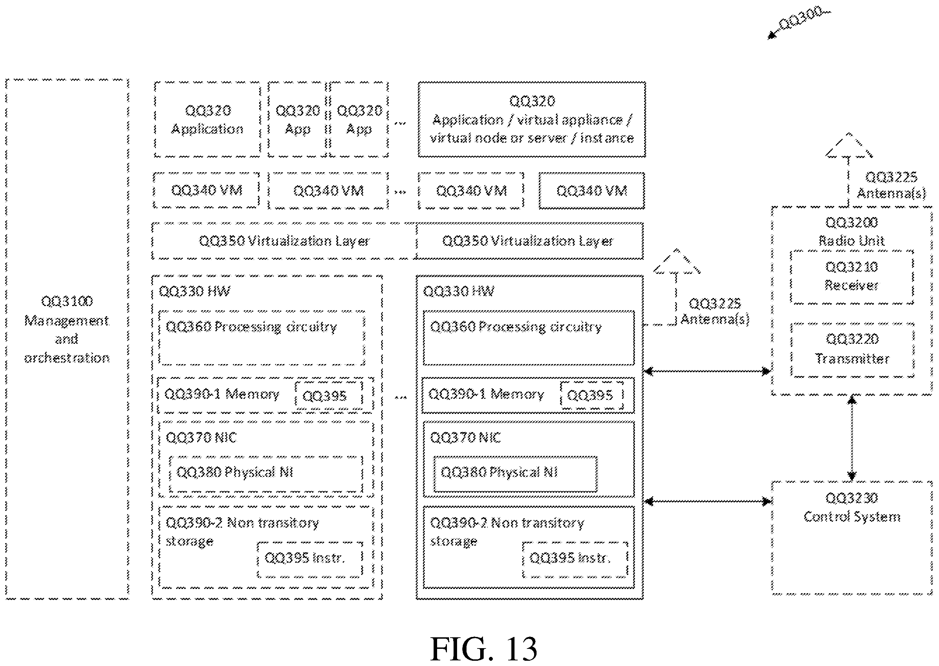

Figure 13 is a schematic block diagram illustrating a virtualization environment QQ300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments QQ300 hosted by one or more of hardware nodes QQ330. Further, in embodiments in which the virtual node is not a radio access node or does not require radio connectivity (e.g., a core network node), then the network node may be entirely virtualized.

The functions may be implemented by one or more applications QQ320 (which may alternatively be called software instances, virtual appliances, network functions, virtual nodes, virtual network functions, etc.) operative to implement some of the features, functions, and/or benefits of some of the embodiments disclosed herein. Applications QQ320 are run in virtualization environment QQ300 which provides hardware QQ330 comprising processing circuitry QQ360 and memory 490. Memory 490 contains instructions QQ395 executable by processing circuitry QQ360 whereby application QQ320 is operative to provide one or more of the features, benefits, and/or functions disclosed herein.

Virtualization environment 300, comprises general-purpose or special-purpose network hardware devices QQ330 comprising a set of one or more processors or processing circuitry QQ360, which may be commercial off-the-shelf (COTS) processors, dedicated Application Specific Integrated Circuits (ASICs), or any other type of processing circuitry including digital or analog hardware components or special purpose processors. Each hardware device may comprise memory QQ390-1 which may be non-persistent memory for temporarily storing instructions QQ395 or software executed by processing circuitry QQ360. Each hardware device may comprise one or more network interface controllers (NICs) QQ370, also known as network interface cards, which include physical network interface QQ380. Each hardware device may also include non-transitory, persistent, machine-readable storage media 490-2 having stored therein software QQ395 and/or instructions executable by processing circuitry QQ360. Software QQ395 may include any type of software including software for instantiating one or more virtualization layers QQ350 (also referred to as hypervisors), software to execute virtual machines QQ340 as well as software allowing it to execute functions, features and/or benefits described in relation with some embodiments described herein.

Virtual machines QQ340, comprise virtual processing, virtual memory, virtual networking or interface and virtual storage, and may be run by a corresponding virtualization layer QQ350 or hypervisor. Different embodiments of the instance of virtual appliance QQ320 may be implemented on one or more of virtual machines QQ340, and the implementations may be made in different ways.

During operation, processing circuitry QQ360 executes software QQ395 to instantiate the hypervisor or virtualization layer QQ350, which may sometimes be referred to as a virtual machine monitor (VMM). Virtualization layer QQ350 may present a virtual operating platform that appears like networking hardware to virtual machine QQ340.

As shown in Figure 13, hardware QQ330 may be a standalone network node with generic or specific components. Hardware QQ330 may comprise antenna QQ4225 and may implement some functions via virtualization. Alternatively, hardware QQ330 may be part of a larger cluster of hardware (e.g. such as in a data center or customer premise equipment (CPE)) where many hardware nodes work together and are managed via management and orchestration (MANO) QQ3100, which, among others, oversees lifecycle management of applications QQ320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine QQ340 may be a software implementation of a physical machine that runs programs as if they were executing on a physical, non-virtualized machine. Each of virtual machines QQ340, and that part of hardware QQ330 that executes that virtual machine, be it hardware dedicated to that virtual machine and/or hardware shared by that virtual machine with others of the virtual machines QQ340, forms a separate virtual network elements (VNE).

Still in the context of NFV, Virtual Network Function (VNF) is responsible for handling specific network functions that run in one or more virtual machines QQ340 on top of hardware networking infrastructure QQ330 and corresponds to application QQ320 in Figure 13.

In some embodiments, one or more radio units QQ3200 that each include one or more transmitters QQ3220 and one or more receivers QQ3210 may be coupled to one or more antennas QQ3225. Radio units QQ3200 may communicate directly with hardware nodes QQ330 via one or more appropriate network interfaces and may be used in combination with the virtual components to provide a virtual node with radio capabilities, such as a radio access node or a base station.

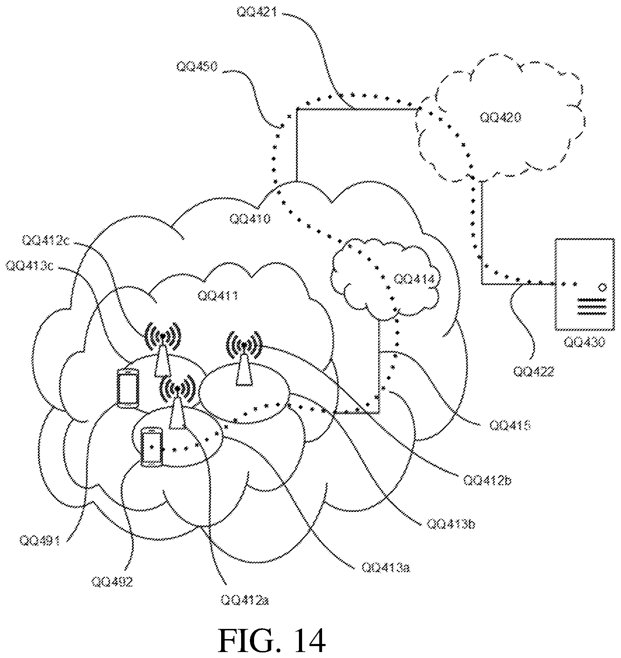

In some embodiments, some signalling can be effected with the use of control system QQ3230 which may alternatively be used for communication between the hardware nodes QQ330 and radio units QQ3200. Figure 14 is a diagram of a telecommunication network connected via an intermediate network to a host computer in accordance with some embodiments

With reference to Figure 14, in accordance with an embodiment, a communication system includes telecommunication network QQ410, such as a 3GPP-type cellular network, which comprises access network QQ411, such as a radio access network, and core network QQ414. Access network QQ411 comprises a plurality of base stations QQ412a, QQ412b, QQ412c, such as NBs, eNBs, gNBs or other types of wireless access points, each defining a corresponding coverage area QQ413a, QQ413b, QQ413c. Each base station QQ412a, QQ412b, QQ412c is connectable to core network QQ414 over a wired or wireless connection QQ415. A first UE QQ491 located in coverage area QQ413c is configured to wirelessly connect to, or be paged by, the corresponding base station QQ412c. A second UE QQ492 in coverage area QQ413a is wirelessly connectable to the corresponding base station QQ412a. While a plurality of UEs QQ491, QQ492 are illustrated in this example, the disclosed embodiments are equally applicable to a situation where a sole UE is in the coverage area or where a sole UE is connecting to the corresponding base station QQ412.

Telecommunication network QQ410 is itself connected to host computer QQ430, which may be embodied in the hardware and/or software of a standalone server, a cloud-implemented server, a distributed server or as processing resources in a server farm. Host computer QQ430 may be under the ownership or control of a service provider, or may be operated by the service provider or on behalf of the service provider. Connections QQ421 and 522 between telecommunication network QQ410 and host computer QQ430 may extend directly from core network QQ414 to host computer QQ430 or may go via an optional intermediate network QQ420. Intermediate network QQ420 may be one of, or a combination of more than one of, a public, private or hosted network; intermediate network QQ420, if any, may be a backbone network or the Internet; in particular, intermediate network QQ420 may comprise two or more sub-networks (not shown).

The communication system of Figure 14 as a whole enables connectivity between the connected UEs QQ491, QQ492 and host computer QQ430. The connectivity may be described as an over-the-top (OTT) connection QQ450. Host computer QQ430 and the connected UEs QQ491, QQ492 are configured to communicate data and/or signaling via OTT connection QQ450, using access network QQ411, core network QQ414, any intermediate network QQ420 and possible further infrastructure (not shown) as intermediaries. OTT connection QQ450 may be transparent in the sense that the participating communication devices through which OTT connection QQ450 passes are unaware of routing of uplink and downlink communications. For example, base station QQ412 may not or need not be informed about the past routing of an incoming downlink communication with data originating from host computer QQ430 to be forwarded (e.g., handed over) to a connected UE QQ491. Similarly, base station QQ412 need not be aware of the future routing of an outgoing uplink communication originating from the UE QQ491 towards the host computer QQ430.

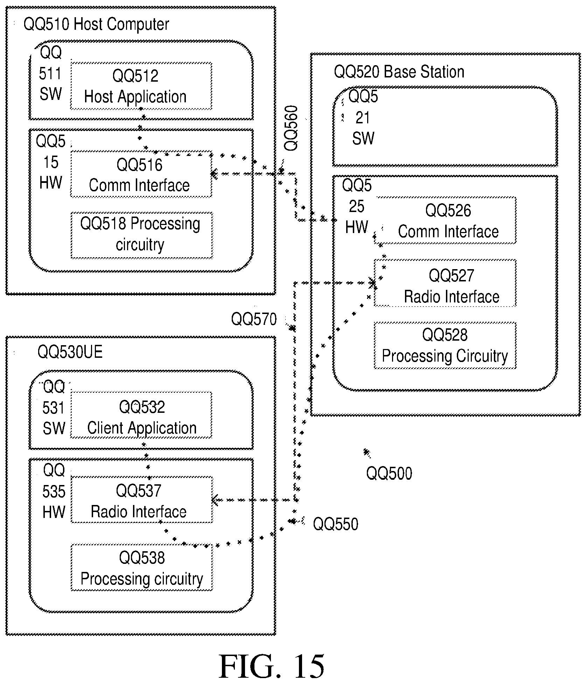

Figure 15 is a diagram of a host computer communicating via a base station with a user equipment over a partially wireless connection in accordance with some embodiments.

Example implementations, in accordance with an embodiment, of the UE, base station and host computer discussed in the preceding paragraphs will now be described with reference to Figure 15. In communication system QQ500, host computer QQ510 comprises hardware QQ515 including communication interface QQ516 configured to set up and maintain a wired or wireless connection with an interface of a different communication device of communication system QQ500. Host computer QQ510 further comprises processing circuitry QQ518, which may have storage and/or processing capabilities. In particular, processing circuitry QQ518 may comprise one or more programmable processors, application-specific integrated circuits, field programmable gate arrays or combinations of these (not shown) adapted to execute instructions. Host computer QQ510 further comprises software QQ511, which is stored in or accessible by host computer QQ510 and executable by processing circuitry QQ518. Software QQ511 includes host application QQ512. Host application QQ512 may be operable to provide a service to a remote user, such as UE QQ530 connecting via OTT connection QQ550 terminating at UE QQ530 and host computer QQ510. In providing the service to the remote user, host application QQ512 may provide user data which is transmitted using OTT connection QQ550.

Communication system QQ500 further includes base station QQ520 provided in a telecommunication system and comprising hardware QQ525 enabling it to communicate with host computer QQ510 and with UE QQ530. Hardware QQ525 may include communication interface QQ526 for setting up and maintaining a wired or wireless connection with an interface of a different communication device of communication system QQ500, as well as radio interface QQ527 for setting up and maintaining at least wireless connection QQ570 with UE QQ530 located in a coverage area (not shown in Figure 15) served by base station QQ520. Communication interface QQ526 may be configured to facilitate connection QQ560 to host computer QQ510. Connection QQ560 may be direct or it may pass through a core network (not shown in Figure 15) of the telecommunication system and/or through one or more intermediate networks outside the telecommunication system. In the embodiment shown, hardware QQ525 of base station QQ520 further includes processing circuitry QQ528, which may comprise one or more programmable processors, application-specific integrated circuits, field programmable gate arrays or combinations of these (not shown) adapted to execute instructions. Base station QQ520 further has software QQ521 stored internally or accessible via an external connection.

Communication system QQ500 further includes UE QQ530 already referred to. Its hardware QQ535 may include radio interface QQ537 configured to set up and maintain wireless connection QQ570 with a base station serving a coverage area in which UE QQ530 is currently located. Hardware QQ535 of UE QQ530 further includes processing circuitry QQ538, which may comprise one or more programmable processors, application-specific integrated circuits, field programmable gate arrays or combinations of these (not shown) adapted to execute instructions. UE QQ530 further comprises software QQ531, which is stored in or accessible by UE QQ530 and executable by processing circuitry QQ538. Software QQ531 includes client application QQ532. Client application QQ532 may be operable to provide a service to a human or non-human user via UE QQ530, with the support of host computer QQ510. In host computer QQ510, an executing host application QQ512 may communicate with the executing client application QQ532 via OTT connection QQ550 terminating at UE QQ530 and host computer QQ510. In providing the service to the user, client application QQ532 may receive request data from host application QQ512 and provide user data in response to the request data. OTT connection QQ550 may transfer both the request data and the user data. Client application QQ532 may interact with the user to generate the user data that it provides.

It is noted that host computer QQ510, base station QQ520 and UE QQ530 illustrated in Figure 15 may be similar or identical to host computer QQ430, one of base stations QQ412a, QQ412b, QQ412c and one of UEs QQ491, QQ492 of Figure 14, respectively. This is to say, the inner workings of these entities may be as shown in Figure 15 and independently, the surrounding network topology may be that of Figure 14.

In Figure 15, OTT connection QQ550 has been drawn abstractly to illustrate the communication between host computer QQ510 and UE QQ530 via base station QQ520, without explicit reference to any intermediary devices and the precise routing of messages via these devices. Network infrastructure may determine the routing, which it may be configured to hide from UE QQ530 or from the service provider operating host computer QQ510, or both. While OTT connection QQ550 is active, the network infrastructure may further take decisions by which it dynamically changes the routing (e.g., on the basis of load balancing consideration or reconfiguration of the network).

Wireless connection QQ570 between UE QQ530 and base station QQ520 is in accordance with the teachings of the embodiments described throughout this disclosure. One or more of the various embodiments improve the performance of OTT services provided to UE QQ530 using OTT connection QQ550, in which wireless connection QQ570 forms the last segment. More precisely, the teachings of these embodiments may improve the for management of master and secondary cell group configuration and thereby provide benefits such as improving network connectivity.

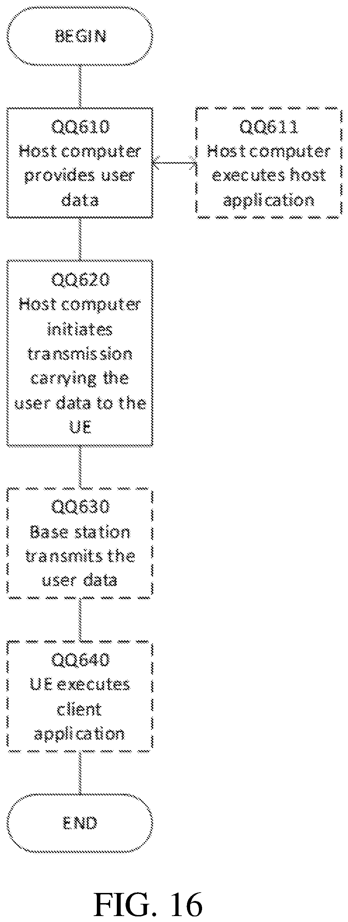

A measurement procedure may be provided for the purpose of monitoring data rate, latency and other factors on which the one or more embodiments improve. There may further be an optional network functionality for reconfiguring OTT connection QQ550 between host computer QQ510 and UE QQ530, in response to variations in the measurement results. The measurement procedure and/or the network functionality for reconfiguring OTT connection QQ550 may be implemented in software QQ511 and hardware QQ515 of host computer QQ510 or in software QQ531 and hardware QQ535 of UE QQ530, or both. In embodiments, sensors (not shown) may be deployed in or in association with communication devices through which OTT connection QQ550 passes; the sensors may participate in the measurement procedure by supplying values of the monitored quantities exemplified above, or supplying values of other physical quantities from which software QQ511, QQ531 may compute or estimate the monitored quantities. The reconfiguring of OTT connection QQ550 may include message format, retransmission settings, preferred routing etc.; the reconfiguring need not affect base station QQ520, and it may be unknown or imperceptible to base station QQ520. Such procedures and functionalities may be known and practiced in the art. In certain embodiments, measurements may involve proprietary UE signaling facilitating host computer QQ510's measurements of throughput, propagation times, latency and the like. The measurements may be implemented in that software QQ511 and QQ531 causes messages to be transmitted, in particular empty or 'dummy' messages, using OTT connection QQ550 while it monitors propagation times, errors etc. Figure 16 relates to methods implemented in a communication system including a host computer, a base station and a user equipment in accordance with some embodiments.

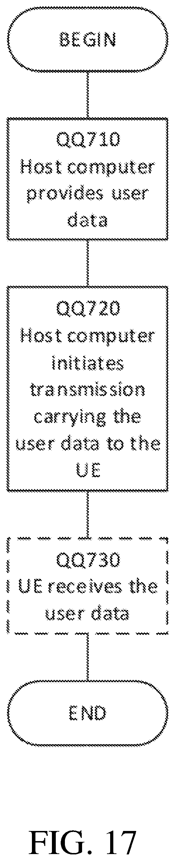

In particular, Figure 16 is a flowchart illustrating a method implemented in a communication system, in accordance with one embodiment. The communication system includes a host computer, a base station and a UE which may be those described with reference to Figures 14 and 15. For simplicity of the present disclosure, only drawing references to Figure 16 will be included in this section. In step QQ610, the host computer provides user data. In substep QQ611 (which may be optional) of step QQ610, the host computer provides the user data by executing a host application. In step QQ620, the host computer initiates a transmission carrying the user data to the UE. In step QQ630 (which may be optional), the base station transmits to the UE the user data which was carried in the transmission that the host computer initiated, in accordance with the teachings of the embodiments described throughout this disclosure. In step QQ640 (which may also be optional), the UE executes a client application associated with the host application executed by the host computer. Figure 17 relates to methods implemented in a communication system including a host computer, a base station and a user equipment in accordance with some embodiments.

Figure 17 is a flowchart illustrating a method implemented in a communication system, in accordance with one embodiment. The communication system includes a host computer, a base station and a UE which may be those described with reference to Figures 14 and 15. For simplicity of the present disclosure, only drawing references to Figure 17 will be included in this section. In step QQ710 of the method, the host computer provides user data. In an optional substep (not shown) the host computer provides the user data by executing a host application. In step QQ720, the host computer initiates a transmission carrying the user data to the UE. The transmission may pass via the base station, in accordance with the teachings of the embodiments described throughout this disclosure. In step QQ730 (which may be optional), the UE receives the user data carried in the transmission.

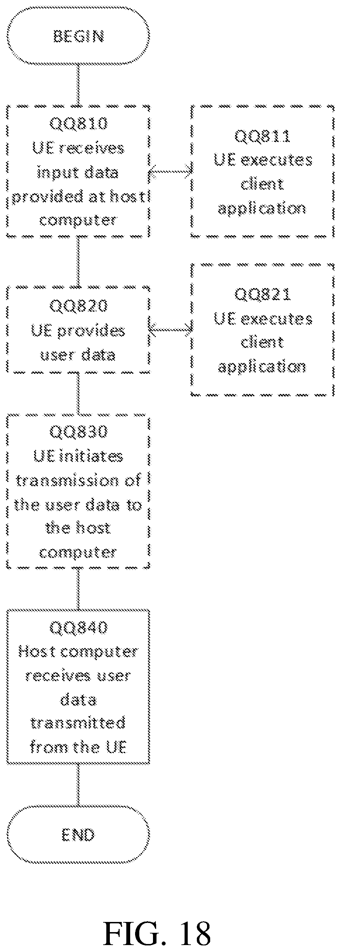

Figure 18 is related to methods implemented in a communication system including a host computer, a base station and a user equipment in accordance with some embodiments. In particular, Figure 18 is a flowchart illustrating a method implemented in a communication system, in accordance with one embodiment. The communication system includes a host computer, a base station and a UE which may be those described with reference to Figures 14 and 15. For simplicity of the present disclosure, only drawing references to Figure 18 will be included in this section. In step QQ810 (which may be optional), the UE receives input data provided by the host computer. Additionally or alternatively, in step QQ820, the UE provides user data. In substep QQ821 (which may be optional) of step QQ820, the UE provides the user data by executing a client application. In substep QQ811 (which may be optional) of step QQ810, the UE executes a client application which provides the user data in reaction to the received input data provided by the host computer. In providing the user data, the executed client application may further consider user input received from the user. Regardless of the specific manner in which the user data was provided, the UE initiates, in substep QQ830 (which may be optional), transmission of the user data to the host computer. In step QQ840 of the method, the host computer receives the user data transmitted from the UE, in accordance with the teachings of the embodiments described throughout this disclosure.

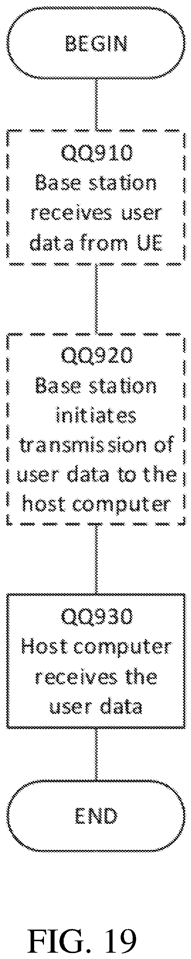

Figure 19 relates to methods implemented in a communication system including a host computer, a base station and a user equipment in accordance with some embodiments. In particular, Figure 19 is a flowchart illustrating a method implemented in a communication system, in accordance with one embodiment. The communication system includes a host computer, a base station and a UE which may be those described with reference to Figures 14 and 15. For simplicity of the present disclosure, only drawing references to Figure 19 will be included in this section. In step QQ910 (which may be optional), in accordance with the teachings of the embodiments described throughout this disclosure, the base station receives user data from the UE. In step QQ920 (which may be optional), the base station initiates transmission of the received user data to the host computer. In step QQ930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

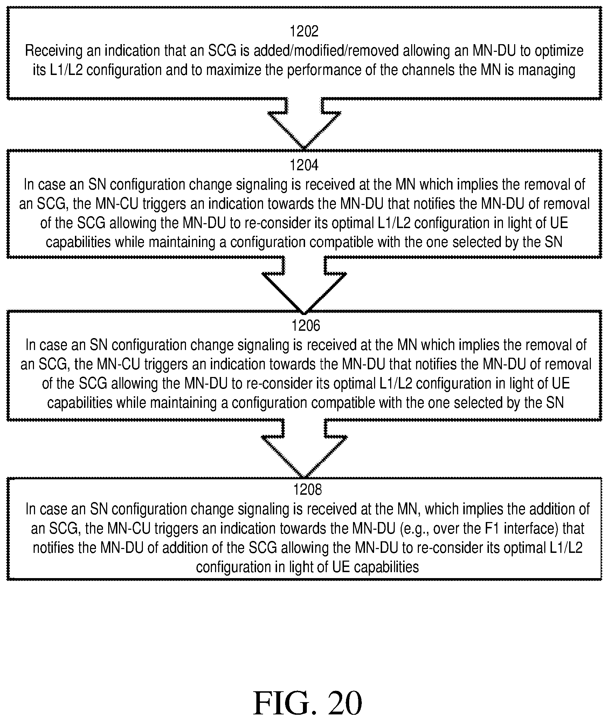

Figure 20 is a diagram of a method in accordance with some embodiments. In particular, Figure 20 is diagram that depicts a method in accordance with particular embodiments, the method begins at step 1202 with the receiving an indication that an SCG is added/modified/removed allowing an MN-DU to optimize its L1/L2 configuration and to maximise the performance of the channels the MN is managing at step 1202.

If it is the case where an SN configuration change signaling is received at the MN which implies the removal of an SCG, the MN-CU triggers an indication towards the MN-DU that notifies the MN-DU of removal of the SCG allowing the MN-DU to re-consider its optimal L1/L2 configuration in light of UE capabilities while maintaining a configuration compatible with the one selected by the SN at step 1204.

If it is case where an SN configuration change signaling is received at the MN also in case of an SN triggered SN modification, which implies the modification of an SCG, the MN-CU triggers an indication towards the MN-DU (e.g. over the F1 interface) that notifies the MN-DU of modification of the SCG allowing the MN-DU to re-consider its optimal L1/L2 configuration in light of UE capabilities at step 1206.

If it is the case where an SN configuration change signaling is received at the MN, which implies the addition of an SCG, the MN-CU triggers an indication towards the MN-DU (e.g. over the F1 interface) that notifies the MN-DU of addition of the SCG allowing the MN-DU to re-consider its optimal L1/L2 configuration in light of UE capabilities at step 1208.

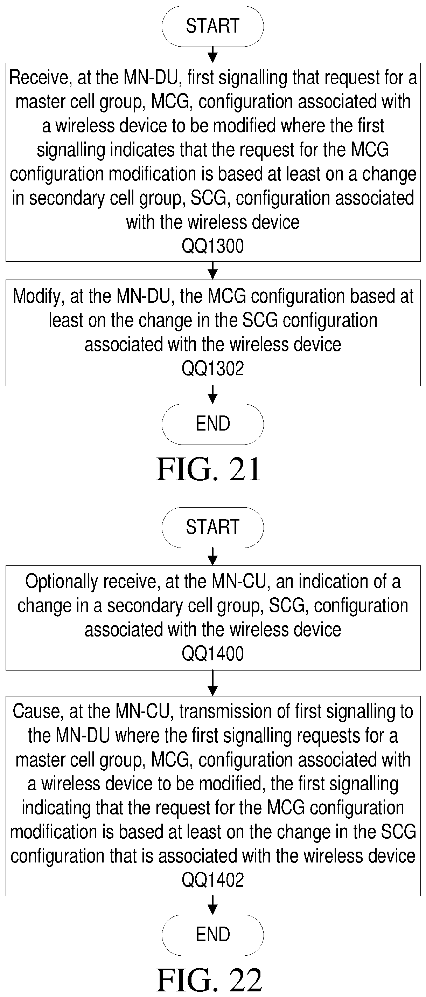

Figure 21 is a flowchart of an example process in network node QQ160 according to some embodiments of the present disclosure. One or more functions/steps/blocks described in Figure 21 may be performed by one or more of processing circuitry QQ170, interface Q190, etc. The network node QQ160 includes a master node-distributed unit, MN-DU, and a MN-centralized unit, MN-CU, in communication with each other. Network node QQ160 is configured to receive (QQ1300), at the MN-DU, first signalling that request for a master cell group, MCG, configuration associated with a wireless device QQ110 to be modified where the first signalling indicates that the request for the MCG configuration modification is based at least on a change in secondary cell group, SCG, configuration associated with the wireless device QQ110, as described herein. Network node QQ160 is configured to modify (QQ1302), at the MN-DU, the MCG configuration based at least on the change in the SCG configuration associated with the wireless device QQ110, as described herein.

According to one or more embodiments, the first signalling is received from the MN-CU. According to one or more embodiments, the change in the SCG configuration corresponds to one of: adding a SCG to the SCG configuration, removing a SCG from the SCG configuration, and modifying a SCG associated with the SCG configuration. According to one or more embodiments, the modification of the MCG configuration includes one of: modifying a quantity of resources utilized by the network node QQ160 for at least one communication channel used by the wireless device QQ110, and modifying a quantity of wireless device capabilities utilized by the network node QQ160 for at least one communication channel used by the wireless device QQ110. According to one or more embodiments, the modification of the MCG configuration includes a reconfiguration of a layer 1/layer 2, L1/L2, configuration.

According to one or more embodiments, the request includes an information element, IE, that is configured to provide the indication that the request for the modification of the MCG configuration is based at least on the change in the SCG configuration. According to one or more embodiments, the processing circuitry QQ170 is further configured to receive second signalling indicating at least one parameter of the SCG configuration is being modified. According to one or more embodiments, the change in the SCG configuration indicates one of: a different subset of wireless device capabilities is being implemented; and that the MCG configuration is no longer restricted to at least one band combination.

Figure 22 is a flowchart of an example process in network node QQ160 according to some embodiments of the present disclosure. One or more functions/steps/blocks described in Figure 22 may be performed by one or more of processing circuitry QQ170, interface Q190, etc. The network node QQ160 includes a master node-distributed unit, MN-DU, and a MN-centralized unit, MN-CU, in communication with each other. Network node QQ160 is configured to optionally receive (QQ1400), at the MN-CU, an indication of a change in a secondary cell group, SCG, configuration associated with the wireless device QQ110, as described herein. Network node QQ160 is configured to cause (QQ1402), at the MN-CU, transmission of first signalling to the MN-DU, the first signalling requesting for a master cell group, MCG, configuration associated with a wireless device QQ110 to be modified where the first signalling indicates that the request for the MCG configuration modification is based at least on the change in the SCG configuration that is associated with the wireless device QQ110.

According to one or more embodiments, the change in the SCG configuration corresponds to one of: adding a SCG to the SCG configuration, removing a SCG from the SCG configuration, and modifying a SCG associated with the SCG configuration. According to one or more embodiments, the modification of the MCG configuration includes one of: modifying a quantity of resources utilized by the network node QQ160 for at least one communication channel used by the wireless device QQ110, and modifying a quantity of wireless device capabilities utilized by the network node QQ160 for at least one communication channel used by the wireless device QQ110. According to one or more embodiments, the modification of the MCG configuration includes a reconfiguration of a layer 1/layer 2, L1/L2, configuration.

According to one or more embodiments, the request includes an information element, IE, that is configured to provide the indication that the request for the modification of the MCG configuration is based at least on the change in the SCG configuration. According to one or more embodiments, the change in the SCG configuration indicates one of: a different subset of wireless device capabilities is being implemented, and that the MCG configuration is no longer restricted to at least one band combination.

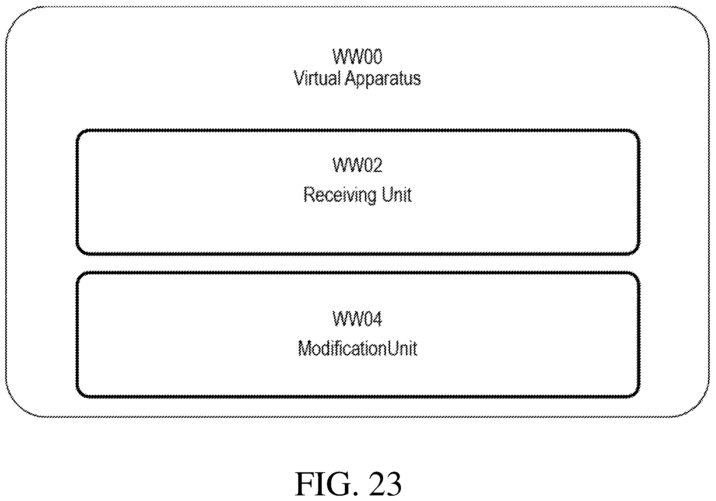

Figure 23 is a diagram of virtualization apparatus in accordance with some embodiments. In particular, Figure 23 illustrates a schematic block diagram of an apparatus WW00 in a wireless network (for example, the wireless network shown in Figure 11). The apparatus may be implemented in a wireless device or network node (e.g., wireless device QQ110 or network node QQ160 shown in Figure 11). Apparatus WW00 is operable to carry out the example method described with reference to Figure 20 and possibly any other processes or methods disclosed herein. It is also to be understood that the method of one or more figures is not necessarily carried out solely by apparatus WW00. At least some operations of the method can be performed by one or more other entities.

Virtual Apparatus WW00 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause the receiving of an indication that an SCG is added/modified/removed allowing an MN-DU to optimize its L1/L2 configuration and to maximise the performance of the channels the MN is managing, Receiving Unit WW02, and any other suitable units of apparatus WW00 to perform corresponding functions according one or more embodiments of the present disclosure.

As illustrated in Figure 23, apparatus WW00 includes Receiving Unit WW02, and Modification Unit WW04 and Modification Unit WW02 is configured to receive an indication that an SCG is added/modified/removed allowing an MN-DU to optimize its L1/L2 configuration and to maximise the performance of the channels the MN is managing. Modification Unit WW04 is configured to trigger an indication toward an MN-DU that notifies the MN-DU of such change in the SCG.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- 1x RTT: CDMA2000 1x Radio Transmission Technology
- 3GPP: 3rd Generation Partnership Project
- 5G: 5th Generation
- ABS: Almost Blank Subframe
- ARQ: Automatic Repeat Request
- AWGN: Additive White Gaussian Noise
- BCCH: Broadcast Control Channel
- BCH: Broadcast Channel
- CA: Carrier Aggregation
- CC: Carrier Component
- CCCH SDU: Common Control Channel SDU
- CDMA: Code Division Multiplexing Access
- CGI: Cell Global Identifier
- CIR: Channel Impulse Response
- CP: Cyclic Prefix
- CPICH: Common Pilot Channel
- CPICH Ec/No: CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- FFS: For Further Study
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- LOS: Line of Sight
- LPP: LTE Positioning Protocol
- LTE: Long-Term Evolution
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- NPDCCH: Narrowband Physical Downlink Control Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDCP: Packet Data Convergence Protocol
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RLC: Radio Link Control
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDAP: Service Data Adaptation Protocol
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TDD: Time Division Duplex
- TDOA: Time Difference of Arrival
- TOA: Time of Arrival
- TSS: Tertiary Synchronization Signal
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

It will be appreciated by persons skilled in the art that the embodiments described herein are not limited to what has been particularly shown and described herein above. In addition, unless mention was made above to the contrary, it should be noted that all of the accompanying drawings are not to scale.

## Claims

1. A method implemented by a network node (QQ160) including a master node-distributed unit, MN-DU, and a MN-centralized unit, MN-CU, in communication with each other, the method comprising:
receiving (QQ1300), at the MN-DU, first signalling that request for a master cell group, MCG, configuration associated with a wireless device to be modified, the first signalling indicating that the request for the MCG configuration modification is based at least on a change in secondary cell group, SCG, configuration associated with the wireless device (QQ110); and
modifying (QQ1302), at the MN-DU, the MCG configuration based at least on the change in the SCG configuration associated with the wireless device (QQ110);
wherein the first signalling is received from the MN-CU; and
wherein the request includes an information element, IE, that is configured to provide the indication that the request for the modification of the MCG configuration is based at least on the change in the SCG configuration.

2. The method of Claim 1, wherein the change in the SCG configuration corresponds to one of:
adding a SCG to the SCG configuration;
removing a SCG from the SCG configuration; and
modifying a SCG associated with the SCG configuration.

3. The method of any one of Claims 1-2, wherein the modification of the MCG configuration includes one of:
modifying a quantity of resources utilized by the network node (QQ160) for at least one communication channel used by the wireless device (QQ110); and
modifying a quantity of wireless device capabilities utilized by the network node (QQ160) for at least one communication channel used by the wireless device (QQ110).

4. The method of any one of Claims 1-3, wherein the modification of the MCG configuration includes a reconfiguration of a layer 1/layer 2, L1/L2, configuration.

5. The method of any one of Claims 1-4, further comprising receiving second signalling indicating at least one parameter of the SCG configuration is being modified.

6. The method of any one of Claims 1-5, wherein the change in the SCG configuration indicates one of:
a different subset of wireless device capabilities is being implemented; and
that the MCG configuration is no longer restricted to at least one band combination.

7. A network node (QQ160) including a master node-distributed unit, MN-DU, and a MN-centralized unit, MN-CU, in communication with each other, the network node (QQ160) comprising processing circuitry (QQ170) configured to perform the method of any one of the preceding claims.

8. A method implemented by a network node (QQ160) including a master node-distributed unit, MN-DU, and a MN-centralized unit, MN-CU, in communication with each other, the method comprising:
causing (QQ1402), at the MN-CU, transmission of first signalling to the MN-DU, the first signalling requesting for a master cell group, MCG, configuration associated with a wireless device (QQ110) to be modified, the first signalling indicating that the request for the MCG configuration modification is based at least on a change in a SCG configuration that is associated with the wireless device (QQ110);
wherein the request includes an information element, IE, that is configured to provide the indication that the request for the modification of the MCG configuration is based at least on the change in the SCG configuration.

9. The method of Claim 8, further comprising:
receiving (QQ1400), at the MN-CU, an indication of a change in a secondary cell group, SCG, configuration associated with the wireless device (QQ110).

10. The method of Claim 8 or 9, wherein the change in the SCG configuration corresponds to one of:
adding a SCG to the SCG configuration;
removing a SCG from the SCG configuration; and
modifying a SCG associated with the SCG configuration.

11. The method of any one of Claims 8-10, wherein the modification of the MCG configuration includes one of:
modifying a quantity of resources utilized by the network node (QQ160) for at least one communication channel used by the wireless device (QQ110); and
modifying a quantity of wireless device capabilities utilized by the network node (QQ160) for at least one communication channel used by the wireless device (QQ110).

12. The method of any one of Claims 8-11, wherein the modification of the MCG configuration includes a reconfiguration of a layer 1/layer 2, L1/L2, configuration.

13. The method of any one of Claims 8-12, wherein the change in the SCG configuration indicates one of:
a different subset of wireless device capabilities is being implemented; and
that the MCG configuration is no longer restricted to at least one band combination.

14. A network node (QQ160) including a master node-distributed unit, MN-DU, and a MN-centralized unit, MN-CU, in communication with each other, the network node (QQ160) comprising processing circuitry (QQ170) configured to perform the method of any one of claims 8-13.

## Patentansprüche

1. Ein Verfahren, das von einem Netzwerkknoten (QQ160) implementiert wird, der eine verteilte Masterknoteneinheit, MN-DU, und eine zentralisierte MN-Einheit, MN-CU, in Kommunikation miteinander umfasst, wobei das Verfahren Folgendes beinhaltet:
Empfangen (QQ1300), an der MN-DU, einer ersten Signalisierung, die anfordert, dass eine Master-Zellengruppen-Konfiguration, MCG-Konfiguration, die mit einer drahtlosen Vorrichtung assoziiert ist, modifiziert werden soll, wobei die erste Signalisierung anzeigt, dass die Anforderung für die MCG-Konfigurationsmodifikation mindestens auf einer Änderung der Konfiguration der sekundären Zellengruppe, SCG-Konfiguration, basiert, die mit der drahtlosen Vorrichtung (QQ110) assoziiert ist; und
Modifizieren (QQ1302), an der MN-DU, der MCG-Konfiguration basierend mindestens auf der Änderung der SCG-Konfiguration, die mit der drahtlosen Vorrichtung (QQ110) assoziiert ist;
wobei die erste Signalisierung von der MN-CU empfangen wird; und
wobei die Anforderung ein Informationselement, IE, umfasst, das konfiguriert ist, um die Anzeige bereitzustellen, dass die Anforderung für die Modifikation der MCG-Konfiguration mindestens auf der Änderung der SCG-Konfiguration basiert.

2. Verfahren gemäß Anspruch 1, wobei die Änderung der SCG-Konfiguration einem der Folgenden entspricht:
Hinzufügen einer SCG zu der SCG-Konfiguration;
Entfernen einer SCG aus der SCG-Konfiguration; und
Modifizieren einer SCG, die mit der SCG-Konfiguration assoziiert ist.

3. Verfahren gemäß einem der Ansprüche 1-2, wobei die Modifikation der MCG-Konfiguration eines der Folgenden umfasst:
Modifizieren einer Menge von Ressourcen, die von dem Netzwerkknoten (QQ160) für mindestens einen Kommunikationskanal genutzt werden, der von der drahtlosen Vorrichtung (QQ110) verwendet wird; und
Modifizieren einer Menge von Fähigkeiten der drahtlosen Vorrichtung, die von dem Netzwerkknoten (QQ160) für mindestens einen Kommunikationskanal genutzt werden, der von der drahtlosen Vorrichtung (QQ110) verwendet wird.

4. Verfahren gemäß einem der Ansprüche 1-3, wobei die Modifikation der MCG-Konfiguration eine Neukonfiguration einer Schicht-1/Schicht-2-Konfiguration, L1/L2-Konfiguration, umfasst.

5. Verfahren gemäß einem der Ansprüche 1-4, das ferner das Empfangen einer zweiten Signalisierung beinhaltet, die anzeigt, dass mindestens ein Parameter der SCG-Konfiguration modifiziert wird.

6. Verfahren gemäß einem der Ansprüche 1-5, wobei die Änderung der SCG-Konfiguration eines der Folgenden anzeigt:
eine andere Teilmenge von Fähigkeiten der drahtlosen Vorrichtung wird implementiert; und
dass die MCG-Konfiguration nicht mehr auf mindestens eine Bandkombination beschränkt ist.

7. Ein Netzwerkknoten (QQ160), der eine verteilte Masterknoteneinheit, MN-DU, und eine zentralisierte MN-Einheit, MN-CU, in Kommunikation miteinander umfasst, wobei der Netzwerkknoten (QQ160) eine Verarbeitungsschaltung (QQ170) beinhaltet, die konfiguriert ist, um das Verfahren gemäß einem der vorhergehenden Ansprüche durchzuführen.

8. Ein Verfahren, das von einem Netzwerkknoten (QQ160) implementiert wird, der eine verteilte Masterknoteneinheit, MN-DU, und eine zentralisierte MN-Einheit, MN-CU, in Kommunikation miteinander umfasst, wobei das Verfahren Folgendes beinhaltet:
Veranlassen (QQ1402), an der MN-CU, der Übertragung einer ersten Signalisierung an die MN-DU, wobei die erste Signalisierung anfordert, dass eine Master-Zellengruppen-Konfiguration, MCG-Konfiguration, die mit einer drahtlosen Vorrichtung (QQ110) assoziiert ist, modifiziert werden soll, wobei die erste Signalisierung anzeigt, dass die Anforderung für die MCG-Konfigurationsmodifikation mindestens auf einer Änderung einer SCG-Konfiguration basiert, die mit der drahtlosen Vorrichtung (QQ110) assoziiert ist; wobei die Anforderung ein Informationselement, IE, umfasst, das konfiguriert ist, um die Anzeige bereitzustellen, dass die Anforderung für die Modifikation der MCG-Konfiguration mindestens auf der Änderung der SCG-Konfiguration basiert.

9. Verfahren gemäß Anspruch 8, das ferner Folgendes beinhaltet:
Empfangen (QQ1400), an der MN-CU, einer Anzeige einer Änderung einer Konfiguration der sekundären Zellengruppe, SCG-Konfiguration, die mit der drahtlosen Vorrichtung (QQ110) assoziiert ist.

10. Verfahren gemäß Anspruch 8 oder 9, wobei die Änderung der SCG-Konfiguration einem der Folgenden entspricht:
Hinzufügen einer SCG zu der SCG-Konfiguration;
Entfernen einer SCG aus der SCG-Konfiguration; und
Modifizieren einer SCG, die mit der SCG-Konfiguration assoziiert ist.

11. Verfahren gemäß einem der Ansprüche 8-10, wobei die Modifikation der MCG-Konfiguration eines der Folgenden umfasst:
Modifizieren einer Menge von Ressourcen, die von dem Netzwerkknoten (QQ160) für mindestens einen Kommunikationskanal genutzt werden, der von der drahtlosen Vorrichtung (QQ110) verwendet wird; und
Modifizieren einer Menge von Fähigkeiten der drahtlosen Vorrichtung, die von dem Netzwerkknoten (QQ160) für mindestens einen Kommunikationskanal genutzt werden, der von der drahtlosen Vorrichtung (QQ110) verwendet wird.

12. Verfahren gemäß einem der Ansprüche 8-11, wobei die Modifikation der MCG-Konfiguration eine Neukonfiguration einer Schicht-1/Schicht-2-Konfiguration, L1/L2-Konfiguration, umfasst.

13. Verfahren gemäß einem der Ansprüche 8-12, wobei die Änderung der SCG-Konfiguration eines der Folgenden anzeigt:
eine andere Teilmenge von Fähigkeiten der drahtlosen Vorrichtung wird implementiert; und
dass die MCG-Konfiguration nicht mehr auf mindestens eine Bandkombination beschränkt ist.

14. Ein Netzwerkknoten (QQ160), der eine verteilte Masterknoteneinheit, MN-DU, und eine zentralisierte MN-Einheit, MN-CU, in Kommunikation miteinander umfasst, wobei der Netzwerkknoten (QQ160) eine Verarbeitungsschaltung (QQ170) beinhaltet, die konfiguriert ist, um das Verfahren gemäß einem der Ansprüche 8-13 durchzuführen.

## Revendications

1. Un procédé mis en œuvre par un nœud de réseau (QQ160) incluant une unité distribuée de nœud maître, MN-DU, et une unité centralisée de MN, MN-CU, en communication l'une avec l'autre, le procédé comprenant le fait :
de recevoir (QQ1300), au niveau de la MN-DU, une première signalisation qui demande qu'une configuration de groupe de cellules maître, MCG, associée à un dispositif sans fil soit modifiée, la première signalisation indiquant que la demande de modification de configuration de MCG est basée au moins sur un changement dans une configuration de groupe de cellules secondaire, SCG, associée au dispositif sans fil (QQ110) ; et
de modifier (QQ1302), au niveau de la MN-DU, la configuration de MCG sur la base au moins du changement dans la configuration de SCG associée au dispositif sans fil (QQ110) ;
dans lequel la première signalisation est reçue en provenance de la MN-CU ; et dans lequel la demande inclut un élément d'information, IE, qui est configuré pour fournir l'indication que la demande de modification de la configuration de MCG est basée au moins sur le changement dans la configuration de SCG.

2. Le procédé de la revendication 1, dans lequel le changement dans la configuration de SCG correspond à un élément parmi le fait :
d'ajouter un SCG à la configuration de SCG ;
de supprimer un SCG de la configuration de SCG ; et
de modifier un SCG associé à la configuration de SCG.

3. Le procédé de l'une quelconque des revendications 1 à 2, dans lequel la modification de la configuration de MCG inclut un élément parmi le fait :
de modifier une quantité de ressources employées par le nœud de réseau (QQ160) pour au moins un canal de communication utilisé par le dispositif sans fil (QQ110) ; et
de modifier une quantité de fonctionnalités de dispositif sans fil employées par le nœud de réseau (QQ160) pour au moins un canal de communication utilisé par le dispositif sans fil (QQ110).

4. Le procédé de l'une quelconque des revendications 1 à 3, dans lequel la modification de la configuration de MCG inclut une reconfiguration d'une configuration de couche 1/couche 2, L1/L2.

5. Le procédé de l'une quelconque des revendications 1 à 4, comprenant en outre le fait de recevoir une deuxième signalisation indiquant qu'au moins un paramètre de la configuration de SCG est en cours de modification.

6. Le procédé de l'une quelconque des revendications 1 à 5, dans lequel le changement dans la configuration de SCG indique un élément parmi le fait :
qu'un sous-ensemble différent de fonctionnalités de dispositif sans fil est en cours de mise en œuvre ; et
que la configuration de MCG n'est plus restreinte à au moins une combinaison de bandes.

7. Un nœud de réseau (QQ160) incluant une unité distribuée de nœud maître, MN-DU, et une unité centralisée de MN, MN-CU, en communication l'une avec l'autre, le nœud de réseau (QQ160) comprenant une circuiterie de traitement (QQ170) configurée pour effectuer le procédé de l'une quelconque des revendications précédentes.

8. Un procédé mis en œuvre par un nœud de réseau (QQ160) incluant une unité distribuée de nœud maître, MN-DU, et une unité centralisée de MN, MN-CU, en communication l'une avec l'autre, le procédé comprenant :
le fait de causer (QQ1402), au niveau de la MN-CU, une transmission d'une première signalisation à la MN-DU, la première signalisation demandant qu'une configuration de groupe de cellules maître, MCG, associée à un dispositif sans fil (QQ110) soit modifiée, la première signalisation indiquant que la demande de modification de configuration de MCG est basée au moins sur un changement dans une configuration de SCG qui est associée au dispositif sans fil (QQ110) ;
dans lequel la demande inclut un élément d'information, IE, qui est configuré pour fournir l'indication que la demande de modification de la configuration de MCG est basée au moins sur le changement dans la configuration de SCG.

9. Le procédé de la revendication 8, comprenant en outre :
le fait de recevoir (QQ1400), au niveau de la MN-CU, une indication d'un changement dans une configuration de groupe de cellules secondaire, SCG, associée au dispositif sans fil (QQ110).

10. Le procédé de la revendication 8 ou 9, dans lequel le changement dans la configuration de SCG correspond à un élément parmi le fait :
d'ajouter un SCG à la configuration de SCG ;
de supprimer un SCG de la configuration de SCG ; et
de modifier un SCG associé à la configuration de SCG.

11. Le procédé de l'une quelconque des revendications 8 à 10, dans lequel la modification de la configuration de MCG inclut un élément parmi le fait :
de modifier une quantité de ressources employées par le nœud de réseau (QQ160) pour au moins un canal de communication utilisé par le dispositif sans fil (QQ110) ; et
de modifier une quantité de fonctionnalités de dispositif sans fil employées par le nœud de réseau (QQ160) pour au moins un canal de communication utilisé par le dispositif sans fil (QQ110).

12. Le procédé de l'une quelconque des revendications 8 à 11, dans lequel la modification de la configuration de MCG inclut une reconfiguration d'une configuration de couche 1/couche 2, L1/L2.

13. Le procédé de l'une quelconque des revendications 8 à 12, dans lequel le changement dans la configuration de SCG indique un élément parmi le fait :
qu'un sous-ensemble différent de fonctionnalités de dispositif sans fil est en cours de mise en œuvre ; et
que la configuration de MCG n'est plus restreinte à au moins une combinaison de bandes.

14. Un nœud de réseau (QQ160) incluant une unité distribuée de nœud maître, MN-DU, et une unité centralisée de MN, MN-CU, en communication l'une avec l'autre, le nœud de réseau (QQ160) comprenant une circuiterie de traitement (QQ170) configurée pour effectuer le procédé de l'une quelconque des revendications 8 à 13.
